# EUROPEAN PATENT APPLICATION

(11) **EP 1 138 741 A2**
(43) Date of publication of application: **04.10.2001**
(21) Application number: 01303085.3
(22) Date of filing: 30.03.2001
(51) Int. Cl.: C09K 11/01

(54) **Method of recycling fluorescent substance for fluorescent lamp, recycled fluorescent lamp and lighting apparatus using thereof**

(30) Priority: 30.03.2000 JP 2000093670; 30.03.2000 JP 2000094342; 31.08.2000 JP 2000264344; 28.09.2000 JP 2000297004
(71) Applicant: TOSHIBA LIGHTING & TECHNOLOGY CORPORATION, Shinagawa-ku, Tokyo (JP)
(72) Inventor: Tamura, Nobuhiro, Toshiba Lighting & Tech. Corp., Shinagawa-ku, Tokyo (JP); Izumi, Masahiro, Toshiba Lighting & Tech. Corp., Shinagawa-ku, Tokyo (JP); Shiozaki, Mitsuru, Toshiba Lighting & Tech. Corp, Shinagawa-ku, Tokyo (JP); Hatakeyama, Keiji, Toshiba Lighting & Tech. Corp, Shinagawa-ku, Tokyo (JP); Yorifuji, Takashi, Toshiba Lighting & Tech. Corp, Shinagawa-ku, Tokyo (JP); Nakamura, Mitsunori, Toshiba Lighting & Tech. Corp, Shinagawa-ku, Tokyo (JP); Yotsuyanagi, Masahiko, Toshiba Lighting&Tech. Corp, Shinagawa-ku, Tokyo (JP)
(74) Representative: O'Connell, David Christopher

(57) **Abstract**

The fluorescent substance material and the glass material are individually recovered by classifying the recovered fluorescent lamps according to kind or quality and by stripping off the fluorescent substance coating from the inner surface of the glass bulbs. The recovered fluorescent substance material and the glass material are regenerated and reused. In this case, in the process for regenerating the recovered fluorescent substance, mercury involved in the recovered fluorescent substance is removed, for example, by firing the recovered fluorescent substance in a vacuum, in an inert atmosphere. The recovered glass material is also carried out the process for removing mercury.

## Description

The present invention relates to a method for recovering fluorescent substance (phosphor) and glass material from fluorescent lamps to be recycled, a method for recycling these materials and a fluorescent lamp using the recycled fluorescent substance.

To deal with the recent problems of the exhaustion of the natural resources and environmental pollution etc., desires for recycling electrical appliances become increasingly significant. With the problems, it has been discussed that generally expensive metallic materials among the electronic functional materials used in various electrical equipments should be recycled. Besides, it is practically attempted to recycle them.

For example, fluorescent lamps generally involve mercury within their lamp bulbs. Thus if the lamps are disposed as they are, it might cause environmental pollution. On the other hand, as the life of the fluorescent lamps depends on the degradation of the discharge performance, the fluorescent substance composing the fluorescent substance coating can be recycled for re-using them as the recycled fluorescent substance. Also, the glass material composing the glass bulbs can be reused.

From the foregoing, recycling approaches of recovering fluorescent substances and glass material from the fluorescent lamps to be recycled and then suitably processing these materials for re-use are described in the Japanese patent disclosures Tokuhyoheis 10-500731 and 11-513125. Besides, experiments of recycling such substances and/or materials have been locally attempted. Upon recycling the fluorescent substance and/or the glass material from the fluorescent lamps to be recycled, it is necessary to strip off the fluorescent substance coating from the inner surface of the glass bulbs for separating the fluorescent substance from the glass material.

In this connection, a wide variety of fluorescent lamps differencing in their applications and functions are put into practical use and adopt specific materials and constructions respectively. Therefore, it is afraid that the recycled materials become unable to be reused if such a wide variety of fluorescent lamps are recovered and promiscuously refined. Also, there is a case that a special recover-and-regenerating process has to be performed depending upon the difference of the construction of the fluorescent lamps, if a variety of the fluorescent lamps are handled at the same time, a degradation of the efficiency of the recover-and-regenerating work and the degradation of the quality of the regenerated material may be caused.

In regard to the practical recover-and-regenerating processes of the fluorescent substance and the glass material, also it is considered that various problems arise. For example, when the fluorescent substance coating is stripped off and recovered, the recovery rate of the fluorescent substance is low and furthermore, it is feared that foreign materials and impurities such as metallic components may mix in.

Also, as mercury and/or mercury oxide adheres to or mixes with the recovered fluorescent substance, they must be removed or separated from the recovered fluorescent substance for using the recovered fluorescent substance as a recycled fluorescent substance. Therefore, it is under study to heat the recovered fluorescent substance up to around 800 °C in the atmosphere for evaporating the mercury.

However, there is another problem that the fluorescent substance may undergo a thermal deterioration in case of the heating in the atmosphere. Accordingly, if the recovered fluorescent substance is recycled, the luminance of the fluorescent substance will be extensively degraded. Especially, in the case of europium-activated aluminate fluorescent substances and europium-activated halo-phosphate fluorescent substances which are used as a blue emission fluorescent component in the three band emission fluorescent substance, the europium (Eu) as an activator tends to be oxidized. Thus, there are problems that the oxidization of the Eu causes a degradation of the luminescence efficiency of the blue emission fluorescent substance, and furthermore, there is a problem that the luminescence itself cannot be obtained at all.

In a similar manner, as the mercury adheres to or mixes with the recovered glass material, the recovered glass material cannot be used as the recycled glass material if it is stayed as it is. Furthermore, in case of the rapid start type fluorescent lamp, a tin oxide coating (Nesa coating, or light-transmissive conductive coating) is formed. If the glass is reused as cullet as it is, it may cause the segregation of impurity such as tin on the surface of the glass. Therefore, the glass bulbs having the Nesa coating may not reused as they are.

In other prior art, for example, the Japanese Patent application Jikkosho 59-7719 disclose that the glass is recovered from florescent lamps to be recycled and reused, while the fluorescent substance was disposed as sludge.

By the way, among the fluorescent substance coatings once coated on the whole inner surface in manufacturing process for the fluorescent lamp, the coatings on both ends of the glass bulbs hinder the closing of the stem. Therefore they are removed by wiping. As the fluorescent substance removed at this step contains a relatively little amount of impurity, the fluorescent substance can be reused.

As described above, the conventional recover-and-regenerating process for the fluorescent lamps did not adapt to the difference in the type or the variety of the fluorescent lamp. And, in case of that a plural types or varieties of the fluorescent lamps are recycled in a lump, there was a fear of causing a degradation of the efficiency of recover-and-regenerating work as well as a deterioration of the quality of the recycled materials.

Furthermore, removal of mercury from the fluorescent substance and the glass material in the conventional recover-and-regenerating process, was not always satisfactory. Thus there was a fear of causing a various troubles. For example, when mercury is removed from the recovered fluorescent substance, the fluorescent substance (especially, blue emission component in the three band emission fluorescent substance) may be thermally deteriorated. In the case, the degradation of the luminescence of the regenerated fluorescent lamps was troublesome.

In light of the foregoing, it is strongly desired to have a regeneration process of the fluorescent lamps, by which the working efficiency for recover-and-regenerating the fluorescent substance from the fluorescent lamps to be recycled is increased and the quality of the regenerated fluorescent substance can be improved. Also, a method of recycling the fluorescent lamps, by which the deterioration of the characteristics of the glass regenerated from the fluorescent lamps to be recycled is restrained, has been demanded.

Also, in the process of recovering the fluorescent substance from the fluorescent lamp to be recycled, fragments of glass may mix into the recovered fluorescent substance by all means, when the glass bulbs are broken. For this reason, it is troublesome to separate the fragments of glass from the recovered fluorescent substance. And thus it will also cause a cost-up problem.

On the other hand, a technique to recover the fluorescent substance by inserting a nozzle that sucks the fluorescent substance only from an end of the glass tube and to suck the fluorescent substance, without breaking the glass tube for the fluorescent lamps to be recycled, is disclosed in the Japanese patent application Tokkaisho 62-1116685. However, in the fluorescent lamps to be recycled, mercury adheres to the fluorescent substance or makes a compound with the fluorescent substance. In case that mercury adheres to the particles of fluorescent substance, mercury adhered to the particles of fluorescent substance must be removed in advance, as mercury evaporates undesirably during the regeneration process and disrupts the environment. Also, if mercury compound of the fluorescent substance exists, the performance of the regenerated fluorescent substance is deteriorated.

Furthermore, the fluorescent substances used for the fluorescent lamps are classified largely into three band emission fluorescent substance and halo-phosphate fluorescent substance. As these are clearly different in the spectroscopic radiation performance, these have to be individually recovered by separating the fluorescent substances according to their types for recycling.

Furthermore, the fluorescent lamps are classified into the daylight color (6700 K), the whitish daylight color (5000 K), the whitish warm color (3500 K) and the incandescent lamp color (3000 K) which are different in their color temperatures with each other.

As aforementioned, there are various problems for recovering and recycling the fluorescent substances from the fluorescent lamps to be recycled.

Also, there is an other problem that the performance of the fluorescent substance is deteriorated gradually, as the recycling of the fluorescent substance from the fluorescent lamps to be recycled is repeated.

One of the present inventions has been performed to meet the problems as mentioned in the above and an object of the invention is to provide a method of recycling the fluorescent lamp, wherein the efficiency of the process for recover-and-regenerating is increased and a high quality of the regenerated materials are realized, when the fluorescent lamps to be recycled are reused by recover-and-regenerating the composition materials. Also, it is another object of the present invention is to provide a method of recycling the fluorescent lamps, wherein the deterioration of the performances of the regenerated fluorescent substance and the regenerated glass is prevented and the recovering efficiency of the fluorescent substance can be increased.

Furthermore, an other object of the present invention is to provide a method of recycling the fluorescent lamp utilizing the recycled fluorescent substance and a lighting apparatus using the regenerated fluorescent lamp obtained by such a method.

Also, an further object of the present invention is to provide a fluorescent lamp, which can be distinguished as a recycled product, when at least the fluorescent substance of the fluorescent lamp is recycled, and to provide a lighting apparatus using the fluorescent lamp.

In a first aspect of the invention, a method for regenerating the fluorescent substance from the fluorescent lamps is characterized by comprising, classifying the fluorescent lamps to be recycled into each kind or quality of the fluorescent substance, recovering the fluorescent substance from the classified fluorescent lamps, and regenerating the fluorescent substance by removing mercury from the recovered fluorescent substance material.

Furthermore, the first aspect of the invention can comprise, recovering the glass material from the classified fluorescent lamps, and regenerating the glass material by removing mercury from the recovered glass material by the process.

As described above, it is able to attain the improvement of the efficiency of the recover-and-regenerating process for the fluorescent substance and the glass material, as recover-and-regenerating process can be performed for each type or class of the fluorescent lamps to be recycled by classifying the fluorescent lamps to be recycled into the respective types or classes before the fluorescent substance and the glass material are recovered. And, it becomes possible to obtain a high quality of the regenerated fluorescent substance by removing mercury from the recovered fluorescent substance. Also, it is desirable that mercury is removed from the recovered glass, it is possible to obtain a high quality of the regenerated glass by doing so.

In the first aspect of the invention, the classifying process can comprise a process for classifying the fluorescent substance for each kind of the fluorescent substance by inserting the ultraviolet radiation source into the inside of the fluorescent lamps; and having the ultraviolet radiation of wavelength of 365 nm from the source irradiated; by having the fluorescent substance exited; and by detecting the spectrum of the emitted radiation from the fluorescent substance. The classifying process can also comprise a process for classifying the fluorescent lamps into the typical fluorescent lamps and the rapid start type fluorescent lamps based on the measured resistance value of the glass bulb, while the resistance of the glass bulbs is measured.

In a second aspect of the invention, a method for regenerating the fluorescent substance from the fluorescent lamps is characterized by comprising, the process for regenerating the fluorescent substance material comprises a process to remove mercury by firing the fluorescent substance material in vacuum, in a reducing atmosphere or in an inert atmosphere.

As described above, the deterioration of the performance of the fluorescent substance by oxidization and the like can be prevented, by removing mercury involved in the fluorescent substance by firing the recovered fluorescent substance in vacuum, in a reductive atmosphere or in an inert atmosphere. In case of divalent europium-activated aluminate fluorescent substance or divalent europium-activated halo-phosphate fluorescent substance contained in three band emission fluorescent substance may cause a degradation of the luminescence efficiency by the oxidation of europium and further there is a problem that the luminance itself cannot be obtained, the deterioration of the performance of the blue emission fluorescent substance can be prevented to the large extent by firing the recovered fluorescent substance in vacuum, in a reductive atmosphere or in an inert atmosphere. Furthermore, as the firing temperature for removing mercury can be lowered according to such a firing process, the thermal deterioration of the blue emission fluorescent substance can be prevented. By these countermeasures, it becomes possible to obtain regenerated fluorescent substance maintaining the performance with a good reproducibility.

In the second aspect of the invention, it is preferred to fire the recovered fluorescent material in a vacuum, a reductive atmosphere or an inert atmosphere after fired in the air. In other words, it is desirable to remove the fluorescent substance in a vacuum, a reductive atmosphere or an inert atmosphere, after the organic material is removed after firing in the atmosphere, as the organic impurities are involved in the fluorescent substance. By this means, the regenerated fluorescent substance including less impurities and foreign materials can be obtained more surely.

Furthermore, the fluorescent substance material can be washed with an acid solution, an alkaline solution or an alkali halide solution before or after the firing. It is also possible to not only classify the recovered fluorescent substance material, but also disperse the fluorescent substance material after the firing. By these countermeasures, it becomes possible to improve the performance of the regenerated fluorescent substance still more.

In a third aspect of the invention, a method for regenerating the fluorescent substance from the fluorescent lamps is characterized by that, in a method of recycling the fluorescent lamp comprising a recovering process for recovering the fluorescent substance material from the fluorescent lamp to be recycled and a regenerating process for regenerating the fluorescent substance material, the process for recovering the fluorescent substance material from the fluorescent lamps comprises a process to recover the fluorescent substance material by spraying a pressurized liquid onto the fluorescent substance coating on the inner surface of the fluorescent lamps.

As described above, the recovering efficiency can be increased by preventing the mixing of the foreign material or impurities by spraying a pressurized fluid onto the fluorescent substance coating on the inner surface of the glass bulb and by stripping off the fluorescent substance coating by the pressure of the fluid. As to the fluid for spraying to the fluorescent substance coating, water (either cold or hot), acid solution or alkali solution can be used. In case of the acid solution or the alkali solution is used, it is also possible to solve the adhesives in the fluorescent substance coating into the solution, the recovering efficiency can be increased still more.

In the third aspect of the invention, it is preferred that the glass bulb is cut at the portions inwardly apart by more than 10 mm from the positions of electrodes but within 100 mm from the tube ends of the fluorescent lamp and the fluorescent substance material is recovered from the inner surface of the cut glass bulb.

By this countermeasure, the fluorescent substance can be recovered excluding the florescent substance, which performance is deteriorated, existing in the colored area of the edges of the glass bulb and the performance of the regenerated fluorescent substance can be improved still more.

In a fourth aspect of the invention, a method for regenerating the fluorescent substance from the fluorescent lamps is characterized by that, separating the fluorescent substance material from the inner surface of the glass bulb of the fluorescent lamp to be recycled, recovering the glass bulbs, and removing mercury adhered to or contained in the glass bulb by immersing the recovered glass bulbs into a sulfuric acid.

As described above, a high quality of the regenerated glass can be attained, reusing the recovered glass bulbs after mercury has been removed from the glass bulbs. Mercury can be removed by soaking the recovered glass bulbs in nitric acid solution.

In a fifth aspect of the invention, a method for regenerating the glass bulbs from the fluorescent lamps is characterized by comprising, separating the fluorescent substance material from the inner surface of the glass bulb of the rapid start type fluorescent lamp to be recycled, recovering the glass bulbs, and removing the tin oxide coating from the inner surface of the recovered glass bulb.

As to the rapid start type fluorescent lamp, the same can be reused same as in the case of regenerated glass obtained from the normal fluorescent lamps by removing the tin oxide coating from the inner surface of the recovered glass bulbs. The tin oxide coating is removed by heating the recovered glass bulbs in a reducing atmosphere or by treating the recovered glass bulbs with an acid solution or an alkaline solution.

A sixth aspect of invention, a method for regenerating the fluorescent lamps is characterized by comprising, recovering the fluorescent substance from the fluorescent lamp to be recycled, refining the recovered fluorescent substance, mixing the recovered fluorescent substance with non-recycled fluorescent substance, forming a fluorescent substance layer by coating the mixed fluorescent substance on the inner surface side of the glass bulb, a light-transmissive discharge vessel forming process for forming the light-transmissive discharge vessel by enclosing a pair of electrodes into the both ends of the glass bulb formed with a fluorescent layer, and evacuating the light-transmissive discharge vessel; and the ionizing agent filling process for filling the ionizing agent.

According to the sixth aspect of the invention, when the recycled fluorescent substance is obtained by recovering the fluorescent substance from the fluorescent lamps to be recycled, as the recovered fluorescent substance is heated and processed, and further is refined, the obtained luminescence of the obtained fluorescent substance is so high that a luminous flux almost same to the one of non-recycled fluorescent substance can be obtained.

Also, because, when the fluorescent substance layer is formed, a fluorescent substance layer including the recycled fluorescent substance and non-recycled fluorescent substance is formed, a fluorescent lamp which is not inferior to the fluorescent lamp using non-recycled fluorescent substance only in respect to the total luminous flux, the luminous color and the color rendering can be obtained.

A seventh aspect of invention, a method for regenerating the fluorescent lamps is characterized by comprising, recovering the fluorescent substance from the fluorescent lamp to be recycled, refining the recovered fluorescent substance, mixing the recovered fluorescent substance with non-recycled fluorescent substance, forming a fluorescent substance layer by coating the mixed fluorescent substance on the inner surface side of the glass bulb; a light-transmissive discharge vessel forming process for forming the light-transmissive discharge vessel by enclosing a pair of electrodes into the both ends of the glass bulb formed with a fluorescent layer, and evacuating the light-transmissive discharge vessel; and the ionizing agent filling process for filling the ionizing agent.

According to the seventh aspect of the invention, a composition forming a fluorescent substance coating by wet coating with a mix of recycled fluorescent substance and the non-recycled fluorescent substance, is specified.

In this way, according to the present invention, the composition of the fluorescent substance layer of the fluorescent lamp is simple and the regeneration is easy.

An eighth aspect of invention, a method for regenerating the fluorescent lamps is characterized by comprising, recovering the fluorescent substance from the fluorescent lamps to be recycled;
refining the recovered fluorescent substance, a first fluorescent coating solution preparing process for preparing a non-recycled fluorescent substance solution by mixing the non-recycled fluorescent substance and a solvent and binder solution, a first fluorescent substance coating process for coating the non-recycled fluorescent substance solution on the inner surface side of the glass bulb, a second fluorescent coating solution preparing process for preparing the recycled fluorescent substance solution by mixing the recovered fluorescent substance and a solvent and binder solution, a second fluorescent substance coating process for coating the recycled fluorescent substance solution on the inner surface side of the glass bulb, a fluorescent substance layer forming process for forming the fluorescent substance layer by firing the respective fluorescent substance coatings by heating the glass bulb coated with the non-recycled fluorescent substance solution and the recycled fluorescent substance solution, a light-transmissive discharge vessel forming process for forming the light-transmissive discharge vessel by enclosing a pair of the electrodes into the both ends of the glass bulb formed with the fluorescent substance layer, and an ionizing agent filling process for filling the ionizing agent into the light-transmissive discharge vessel.

According to the eighth aspect of the invention, a composition formed by a plural layer of a recycled fluorescent substance coatings and the non-recycled fluorescent substance coatings, is specified.

Also, in this invention, either of the non-recycled fluorescent substance coating and the recycled fluorescent substance coating may be formed directly on the inner surface of the glass bulbs.

A ninth aspect of invention, a method for regenerating the fluorescent lamps is characterized by that, further to the sixth to eighth aspects of the invention, the firing of the recovered fluorescent substance is performed in the range of the temperature of 100 ~ 700 °C.

According to the ninth aspect of the invention, the temperature range for the heating and processing the recovered fluorescent substance is specified. If the heating temperature is under 100 °C, the removal by the dissolution of mercury compound is not sufficient. While if also the heating temperature is over 700 °C, the fluorescent substance tends to deteriorate. The favorable temperature is between 100 ~ 600 °C.

A tenth aspect of invention, a method for regenerating the fluorescent lamps is characterized by comprising, a fluorescent substance layer forming process for forming a fluorescent substance layer having a reflectance rate of more than 95 % of the non-recycled fluorescent substance by mixing the recycled fluorescent substance and the non-recycled fluorescent substance, a light-transmissive discharge vessel forming process for forming the light-transmissive discharge vessel by enclosing a pair of the electrodes into the both ends of the glass bulb formed with the fluorescent substance layer; and an ionizing agent filling process for filling the ionizing agent into the light-transmissive discharge vessel.

The tenth aspect of the invention specifies a method to obtain the fluorescent lamp having the total luminous flux more than the specified value though the recycled fluorescent substance and the specified value.

In other words, in order to obtain the fluorescent lamp having a total luminous flux more than the specified value, though the recycled fluorescent substance is included, the ratio of the use of the recycled fluorescent substance shall be decided in advance before the fluorescent substance layer is formed by measuring the reflectance of the fluorescent substance. In case that the recycled fluorescent substance itself has a reflectance more than the specified value, it is not necessary to use the non-recycled fluorescent substance and the fluorescent layer consisting of the recycled fluorescent substance only may be formed. On the contrary, if the reflectance of the recycled fluorescent substance is lower than the specified value, a florescent substance layer is formed by increasing the reflectance by adding and mixing the non-recycled fluorescent substance till the specified value can be attained.

In the meantime, the reflectance of the fluorescent substance is a index showing the degree of whiteness in the fluorescent substance. And, the larger the reflectance of the fluorescent substance is, the more luminous flux is excited by the ultraviolet radiation of the wavelength of 254 mm. Therefore, the fluorescent lamp having the total luminous flux more than the specified value can be obtained by maintaining the reflectance of the fluorescent substance over the specified value. By the way, the reflectance of the fluorescent substance can be measured in the state of the powder. Also, the reflectance of the fluorescent substance in this patent means the synthetic reflectance of the whole fluorescent substance used in the fluorescent layers. In other words, in case that the fluorescent layers are formed by mixing the recycled fluorescent substance and the non-recycled fluorescent substance, the reflectance of the fluorescent substance in the mixed condition can be indicated in percentage, when the reflectance of the non-recycled fluorescent substance is specified 100 %. When the fluorescent layers comprises a plurality of layers, e.g., two layers, the synthetic reflectance can be obtained by obtaining the respective reflectance of the recycled fluorescent substance and non-recycled fluorescent substance individually, multiplying the rate of contribution according to the rate of used fluorescent substance by the respective reflectance and by adding the results.

Next, the standard value for obtaining the fluorescent lamps having the specified luminous flux is specified, so that the reflectance of the fluorescent substance comprising the fluorescent substance layers including the recycled fluorescent substance is more than 95 %, when the reflectance of the non-recycled fluorescent substance is specified 100 %. To adjust the fluorescent substance to clear the standard value of the reflectance of the fluorescent substance to be used, the reflectance of recycled fluorescent substance and non-recycled fluorescent substance may be measured individually and also can be measured in the mixed state. In the former case, in order to make the calculation simple, if the reflectance of the non-recycled fluorescent substance is specified 100% and, for example, the reflectance of the recycled fluorescent substance is 90 %, in order to obtain the reflectance of 95 %, the recycled fluorescent substance and the non-recycled fluorescent substance shall be used 50 % each for forming the fluorescent layer. If the reflectance of the recycled fluorescent substance is 93%, a fluorescent substance with reflectance of 95 % can be obtained using the recycled fluorescent substance and the non-recycled fluorescent substance at the ratio of 5 : 2. However, as described above, according to the present invention, a single layer fluorescent substance may be formed by mixing the recycled fluorescent substance and the non recycled fluorescent substance, but also a multi-layer, e.g., a two-layer fluorescent substance may be formed. When the fluorescent substances should be mixed, the mixing can be performed in the state of powder, and also the fluorescent substances may be individually solved in a solvent or a binder to make a suspension for the respective fluorescent substance, when the fluorescent substance solution is prepared.. Further, in short, the solution may be prepared by mixing the fluorescent substance solutions individually prepared at a specified ratio. Also, it is possible to decide the mixing ratio of the fluorescent substances to be used by referring to the luminescence in addition to the measuring the reflectance of the fluorescent substances.

Furthermore, it is also possible to supplement the shortage of component by measuring the chromaticity of the fluorescent substance, when the fluorescent substances are mixed. In this case, as to the fluorescent substance to adjust the chromaticity, either of the recycled fluorescent substance and the non-recycled fluorescent substance may be supplemented. Also, the non-recycled fluorescent substance can be mixed with a color composition deteriorated by recycling.

And according to the above aspect of the invention, the fluorescent lamp, of which fluorescent substance layer includes the recycled fluorescent substance, wherein no difference from the fluorescent lamps using the non-recycled fluorescent substance can be recognized in practical use, can be obtained.

Also, as the luminous flux is estimated by measuring the reflectance of the fluorescent substance, the work is easy and is a method suitable for a mass production.

A eleventh aspect of invention, a method for regenerating the fluorescent lamps is characterized by comprising, a fluorescent substance layer forming process for forming a fluorescent substance layer having a luminescence of more than 95 % of the non-recycled fluorescent substance on the inner surface side of the glass bulb by mixing the recycled fluorescent substance and the non-recycled fluorescent substance, a light-transmissive discharge vessel forming process for forming the light-transmissive discharge vessel by enclosing a pair of the electrodes into the both ends of the glass bulb formed with the fluorescent substance layer, and an ionizing agent filling process for filling the ionizing agent into the light-transmissive discharge vessel.

The eleventh aspect of the invention further specifies a method to obtain a fluorescent lamp having a total luminous flux more than the specified value though the recycled fluorescent substance, and the specified value.

In other words, in order to obtain a fluorescent lamp having a total luminous flux more than the specified value though the recycled fluorescent substance is included, the ratio of the recycled fluorescent substance to be used is decided by measuring the luminescence of the fluorescent substance instead of the reflectance. The measurement of the luminescence of the fluorescent substance is performed by exciting the fluorescent substance powder by irradiating ultraviolet radiation of the wavelength of 254 mm. As the luminescence of the fluorescent substance and the total luminous flux of the fluorescent lamp are almost in a positive correlation, an exact total luminous flux can be estimated. By the way, the ratio of the recycled fluorescent substance and the non-recycled fluorescent substance to be used, and the constitution of the fluorescent substance layer can be set as same as in the method according to the tenth embodiment. Also, it is also possible to decide the ratio of the fluorescent substances by referring to the reflectance in addition to the luminescence measurement of the fluorescent substance.

And, according to the above aspect of the invention, the fluorescent lamp, of which fluorescent substance layer includes the recycled fluorescent substance, wherein no difference from the fluorescent lamps using the non-recycled fluorescent substance can be recognized in practical use, can be obtained.

Also, as the total luminous flux is estimated by measuring the luminescence of the fluorescent substance, the measurement is exact and the method serves to improve the accuracy of control of the total luminous flux.

A twelfth aspect of invention, a method for regenerating the fluorescent lamps is characterized by comprising, A recovering process for obtaining the recycled fluorescent substance by recovering the fluorescent substance from the fluorescent lamps to be recycled and by performing a surface treatment of the fluorescent substance particle after a recovery process including at least an acid treatment is performed, a fluorescent substance layer forming process for forming a fluorescent substance layer including the recovered fluorescent substance on the inner surface side of the glass bulb, a light-transmissive discharge vessel forming process for forming the light-transmissive discharge vessel by enclosing a pair of the electrodes into the both ends of the glass bulb formed with the fluorescent substance layer, and an ionizing agent filling process for filling the ionizing agent into the light-transmissive discharge vessel.

In the regenerating process for the recycled fluorescent substance, if the fluorescent substance to be recycled is processed with an acid and mercury caught on the surface is removed by etching the surface of the fluorescent substance, the deterioration of the performance can be prevented. However, there is another problem that mercury and hydrogen tends to adhere to the fluorescent substance processed with an acid. This is due to the fact that the surface of the fluorescent substance particles becomes rough by etching.

According to the twelfth aspect of the invention, the surface of the recycled fluorescent substance is treated after the process treated with an acid is performed in the regenerating process, so as to reduce the adhesion of mercury and gas. By the way, "regenerating process" means a process, by which impurities are removed from the fluorescent substance recovered from the fluorescent lamps to be recycled in order to obtain the recycled fluorescent substance that can be reused, and the details of the process are not limited. For example, a mercury and glass fragment removing process for removing liquid mercury and glass fragments of the light-transmissive discharge vessel; a refining process for refining the cohered fluorescent substance into proper size by screening and milling; a heating process for separating mercury adhered to the fluorescent substance particles by heating the recycled fluorescent substance, and the like can be used as a preliminary process for the process treated with an acid individually or in a combination of arbitrary plural processes.

Also, the process treating with acid is preferably used for removing mercury and gas by etching the very thin surface layer of the recycled fluorescent substance particles. For example, the process treating with acid can be performed by washing the recycled fluorescent substance using a thin nitric acid, and successively washing with pure water. In the meantime, as the surface of the particles of the fluorescent substance treated with an acid has become rough, the fluorescent substance particles can be verified by means of a comparison with the fluorescent substance particle before the acid treatment by electronic microscope or by a comparison of BET values.

Furthermore, the surface treatment is the process for treating the surface of the fluorescent substance particles so that mercury and gas may hardly adhere to. For example, the surface treatment can be performed by having fine grain of metal oxide adhered on the surface of the recycled fluorescent substance particles almost homogeneously or by having a continuous thin metal oxide coating on the surface of the fluorescent substance particles. In the case of the former embodiment, the proper mean diameter of the fine grain of the metal oxide is 10 ~ 100 nm. By the way, the particle size of the fluorescent substance particle is around 5 ~ 8 *µ* m in case of three band emission fluorescent substance and around mean 10 *µ* m in case of halo-phosphate fluorescent substance.

In the meantime, it is well known already that aluminum oxide fine grain is used as an binder for fluorescent substance. However, in this case, as aluminum oxide coheres between the fluorescent substance particles and adheres and connects the fluorescent substance particles, and as the aluminum oxide is not adhered to the surface of the fluorescent substance particles homogeneously, the function to prevent the adhesion of mercury and gas cannot be obtained practically. These differences can be verified by the comparison through observation by means of electronic microscope. In order to have the fine grain of metal oxide adhered to the surface of the fluorescent substance particles of the recycled fluorescent substance almost homogeneously, it will be better to sprinkle directly the recycled fluorescent substance with a fine grain of metal oxide, or to disperse completely metal oxide as a primary particles in the solution of the recycled fluorescent substance. In order to increase the dispersion of the metal oxide particulates, it is effective to utilize a dispersant such as a surfactant or to increase the viscosity of the suspension by a certain extent. By the way, the metal oxide particulates can be also functioned as a binder for the recycled fluorescent substance. However, the metal oxide particulates as the surface treatment and the metal oxide as the binder can be used in combination.

Also, in case of carrying out a surface treatment by adding a metal oxide, the amount of the metal oxide will be proper in the range of 0.1 ~ 10 weight percentage to the fluorescent substance. When the additive is less than 0.1 %, no enough effect can be obtained. Also, the additive exceeds 10 weight percent, the luminous flux degrades on the contrary. Furthermore, as the effective metal oxide for surface treatment, aluminum oxide, silica, yttrium oxide, zirconia, lanthania etc. can be used.

According to the above aspect of the invention, luminous flux maintaining performance of the fluorescent lamp can be improved, as the adhesion of mercury and gas to the fluorescent substance particles of the recycled fluorescent substance is prevented, by performing acid treatment and further performing surface treatment thereafter in the regeneration process of the recycled fluorescent substance.

A thirteenth aspect of invention, a fluorescent lamps is characterized by comprising, a light-transmissive discharge vessel made of glass bulb, a fluorescent substance layer which is formed including the recycled fluorescent substance performed with a surface treatment by having metal oxide adhered to the surface of the fluorescent substance particle and is located on the inner surface side of the light-transmissive discharge vessel, a pair of electrodes enclosed on the both ends of the light-transmissive discharge vessel, an ionizing agent filled in the light-transmissive discharge vessel, and a bulb base attached to the light-transmissive discharge vessel,

The fluorescent lamp according to the thirteenth embodiment specifies the regenerated fluorescent lamp using the recycled fluorescent substance, of which surface treatment is performed.

In the case of the fluorescent lamp of the embodiment, the recycled fluorescent substance, of which surface treatment is performed, is verified by the fact that metal oxide is almost homogeneously adheres to the surface of the fluorescent substance particles. Also, by means of hydrolysis of metal alkoxide solution, a continuous metal oxide coating can be coated on the surface of the fluorescent substance particles.

And, according to the fluorescent lamp of the embodiment, a recycled fluorescent lamp with an improved performance maintaining luminous flux can be obtained.

A fourteenth aspect of invention, a fluorescent lamps is characterized by comprising, a light-transmissive discharge vessel made of glass bulb, fluorescent substance coating on the inner surface of the light-transmissive discharge vessel, wherein the coating containing at least a recycled fluorescent substance, a pair of electrodes enclosed on the both ends of the light-transmissive discharge vessel;
an ionizing agent filled in the light-transmissive discharge vessel, and a bulb base attached to the light-transmissive discharge vessel.

The fluorescent layer comprises recycled fluorescent substance partly or wholly of the fluorescent substance to be used.

"Indication showing as the recycled product" indicates that at least the fluorescent layer includes a recycled fluorescent substance and furthermore, in short, the glass bulb and the bulb base may be of recycled ones. Also, the indication may be located either on the light-transmissive airtight container or on the bulb base of the fluorescent lamp. And, the embodiment of the indication may be one of symbol, mark and letters or an arbitrary combination of the plural indications, provided that it can be judged that a recycled product is in question. As the symbol, a bar code may be also used. Also, the number of times recycled may also be indicated in addition to the above indications. By the way, in case that a bar code is used partly in the indications showing the product is a recycled one, the number of times recycled, kind of the fluorescent lamp and the like can be indicated so that these can be read out easily and mechanically. In order to distinguish three band emission fluorescent substance and halo-phosphate fluorescent substance at the time of the recovery of the fluorescent lamps, the spectrum of the visible radiation is checked by irradiating ultraviolet radiation, however, the kind of the fluorescent substance used for the fluorescent lamp can be distinguished without fail by introducing the bar code and an automatic classification of the fluorescent lamps can be realized.

When the fluorescent lamps are distributed in the market, it is common that a fluorescent lamp is packed in a fancy box and these are again contained in a carton box, and therefore, it is desirable that the fluorescent lamp can be distinguished as the recycled product easily even in the packed condition. Therefore, the fancy box can be also provided with the indication showing that a recycled product is therein. The indication in this case as same as the fluorescent lamp it self, one of symbol, mark and letters or an arbitrary combination of the plural indications can be adopted.

In fifteenth aspect of the invention, a fluorescent lamp comprises, a lighting apparatus proper, and a fluorescent lamp as defined in any one of previous aspects of the invention, which is supported in the lighting apparatus,

"Lighting apparatus" means in the present invention a wide general idea of all the apparatus using luminescence of fluorescent lamp in any purpose. For example, lighting apparatus, perpendicular back-light apparatus, display apparatus, signal lamp apparatus and the like can be raised.

Also, the lighting apparatus are suitable for home lighting apparatus, however, it is not limited to such application but also for shop lighting apparatus, lighting apparatus for office, outdoor lighting apparatus.

A more complete appreciation of the present invention and many of the attendant advantages thereof will be readily obtained as the same becomes better understood by reference to the following detailed description when considered in connection with the accompanying drawings, wherein:
Fig. 1 is a diagram showing the recover-and-regenerating the fluorescent lamp to be recycled according to the first embodiment of the present invention;
Fig. 2 is a schematic cross section of the glass bulb end of the fluorescent lamp to be recycled in the recovery process according to the first embodiment of the present invention;
Fig. 3 is a schematic diagram showing the method of separating and recovering the fluorescent substance in the recovery process of the fluorescent lamp to be recycled according to the first embodiment of the present invention;
Fig. 4 is a front elevation of the fluorescent lamp regenerated by the method according to the second embodiment of the present invention;
Fig. 5 is an enlarged section showing a part of Fig. 4;
Fig. 6 is a flowchart showing the method according to the second embodiment of the present invention;
Fig. 7 is a partial front section of the fluorescent lamp regenerated according to the third embodiment of the present invention;
Fig. 8 is an enlarged section showing a part of Fig. 7.
Fig. 9 is a flowchart showing the method according to the third embodiment of the present invention;
Fig. 10 is a flowchart showing the method according to the fourth embodiment of the present invention;
Fig. 11 is a flowchart showing the method according to the fifth embodiment of the present invention;
Fig. 12 is s flowchart showing the process for recovering the recycled fluorescent substance in case of the method according to the sixth embodiment of the present invention;
Fig. 13 is a enlarged section showing the general idea of the fluorescent lamp regenerated by the method according to the second embodiment of the present invention;
Fig. 14 is a schematic drawing showing the recycled fluorescent substance particle in accordance with the third embodiment of the present invention;
Fig. 15 is a front view of the recycled fluorescent lamp, partly sectioned according to the fourth embodiment of the present invention;
Fig. 16 is a front view of the recycled fluorescent lamp, partly sectioned according to the fifth embodiment of the present invention; and
Fig. 17 is a section showing a lighting apparatus according to the sixth embodiment of the present invention, more in detail, code-pendant type lighting apparatus.

In the present invention and in the following respective invention, the definition and the meaning of the technical terms are as follows, as far as no special notice is mentioned.

### <Fluorescent Lamp>

The fluorescent lamps in relation with the present invention comprise at least a light-transmissive discharge vessel, a fluorescent substance layer formed on the inner surface of the light-transmissive discharge vessel, a pair of electrodes filled on the both sides of the light-transmissive discharge vessel and an ionizing agent filled in the light-transmissive discharge vessel. Furthermore, the fluorescent lamp may comprise bulb bases and the like as the case may be. Hereinafter, the composing elements of the fluorescent lamps related with the present invention are described item by item.

### <Light-transmissive Discharge Vessel>

The light-transmissive discharge vessel is formed by sealing the both ends of the glass bulb using sealing members or by sealing by means of pinch seal without using sealing members. When the seal is made by a piece of plate, the portion of the plate comprises a stem in general. In case that stem is used, the construction of flare stem, bead stem, button stem such as well known construction can be adopted.

The glass bulb may be of shape of straight tube, curved tube or bent tube.

Also, the glass bulb may be of the construction that a discharging passage is formed by connecting a plurality of straight tubes, curved tubes and bent tubes with connecting tubes.

Furthermore, the diameter of the glass tubes and the axis of the tube for light-transmissive discharge vessel, in other words, the length along the discharging passage is not limited. However, generally the diameter of the light-transmissive discharge vessel is under 40 mm and the length along the tube axis is under 2400 mm. In case of the fluorescent lamp for general lighting, which tube wall load is relatively small, the diameter of the tube is 25 ~ 38 mm and the length along the tube axis is 300 ~ 2400 mm. Also, in case of the high frequency fluorescent lamp for lighting up exclusively, the diameter of the tube is 15 ~ 25.5 mm and the length along the tube axis is 500 ~ 2400 mm. Furthermore, in case of the compact-size fluorescent lamp, the diameter of the tube is under 25 mm, for example, 12 ~ 22 mm and the length along the tube axis is under 2400 mm, for example, 200 ~ 2300 mm. Furthermore, in case of incandescent lamp housing type fluorescent lamps, the diameter of the glass bulb is under 13 mm, for example, 8 ~ 12 mm, and the length along the tube axis is under 500 mm, e.g., 400 ~ 500 mm.

Next, the quality of glass bulb for the light-transmissive discharge vessel is not especially restricted, if the same is provided with an air- tightness, a workability and a refractoriness, however, in general the soft glass of this kind used for the general fluorescent lamps is proper. As soft glass, lead glass and soda-lime glass are available, and either one may be used. For the environmental countermeasures, soda-lime glass is preferable. However, from the viewpoint of workability, soda-lime glass and lead glass can be used in combination. For example, the part of the glass bulb, in which most of glass volume is used, can be formed from soda-lime glass and the part of the stem can be formed from lead glass.

Furthermore, in short, glass other than the soft glass, such as hard glass, semi-hard glass, quartz glass can be also used for glass bulbs. Also, it is also possible to prevent the deterioration of the glass caused by the segregation of alkali composition of the fluorescent substance recycled using the glass of low content of alkali component such as sodium.

Next the shape of the light-transmissive discharge vessel is described.

The light-transmissive discharge vessel may be shaped in either of a straight tube shape or a ring shape. Further, in short, various shapes, in which 2 ~ 4 pieces of tubes of U-shape, U-shape and semi-circle are connected in series in a proper shape, are also permissible.

### <Fluorescent Substance Layer>

The fluorescent lamp regenerated according to the present invention includes a fluorescent substance layer consisting of the recycled fluorescent substance and the non-recycled fluorescent substance.

Also, the fluorescent layer is formed on the side of the inner surface of the light-transmissive discharge vessel. In the meantime, "on the side of the inner surface" means that an embodiment that the layer may be formed directly on the inner surface of the light-transmissive discharge vessel and an embodiment that the layer may be formed indirectly on the inner surface by means of a protective coating made of aluminum oxide etc. or reflective coating made of titanium oxide, both of which are acceptable.

Furthermore, the composition of the fluorescent substance used for the present invention is not limited, however, when considering that the fluorescent substance shall be recycled from the fluorescent lamp to be recycled, it is convenient that either of three band emission fluorescent substance and the halo-phosphate emission fluorescent substance is used as a main component by selection. Also, in short, it is also possible to recover by classifying by the number of times recycled.

By the way, as three band emission fluorescent substance, the following fluorescent substances can be used.
Blue emission fluorescent substance
   (1) Sr₅(PO₄)₃Cl : Eu
   (2) (SrCaBa)₅(PO₄)₃Cl: Eu
   (3) BaMg₂Al₁₆O₂₇ : Eu
Green emission fluorescent substance
   (4) LaPO₄ : Ce, Tb
   (5) (CeTb)MgAl₁₁O₁₉
Red emission fluorescent substance
   (6) Y₂O₃ : Eu

Also, the respective luminous colors of the fluorescent lamps can be realized by selecting from the above luminous substances by combining and by setting the mixing ratio as described below:
Daylight color (6700 K): (3)+(4)+(6)
Daylight white color (5000K): ditto
Lamp color (3000 K): (4)+(6)
Whitish warm color (3500 K): (3)+(4)+(6)

Next, as halo-phosphate fluorescent substance, Ca₁₀(PO₄)6FCl: Sb,Mn can be used.

Further also, the constitution of the fluorescent substance layer is described.

The fluorescent substance layer may consist of a single coating of the fluorescent substance or of a plurality of coatings of fluorescent substance.

In case of the single coating of the fluorescent substance, the fluorescent layer is formed by mixing non-recycled fluorescent substance and the recycled fluorescent substance, coating the mixture and firing. By the way, in order to mix the non-recycled fluorescent substance and the recycled fluorescent substance, the following methods can be used: the both fluorescent substances are mixed in advance before the fluorescent substance solution is prepared; at the step of preparing the fluorescent substance solution, a certain amount of non-recycled fluorescent substance and a certain amount of the recycled fluorescent substance, solvent and binders are individually introduced to make a suspension; or the coating solution made of the non recycled fluorescent substance and the coating solution made of recycled fluorescent substance, which have been individually prepared, are mixed in a specified ratio.

Also, in case of the coating a plurality of fluorescent substance coating, a non recycled fluorescent substance coating mainly consisting of non- recycled fluorescent substance and a recycled fluorescent substance coating mainly consisting of the recycled fluorescent substance coating are individually coated and the fluorescent layer is formed by firing.

### <Electrode>

A pair of the electrodes are filled on the both side of the light-transmissive discharge vessel, and a low pressure mercury discharge is excited between the electrodes.

Also, as to the electrodes, the known electrodes such as filament electrodes, ceramic electrodes, cold cathode can be used.

Filament electrodes are made by coating a electronic radiation substance on the double coil or triple coil of tungsten, and have a construction that the both ends are connected to the ends of a pair of the inner lead wires, which are guided airtight through the light-transmissive discharge vessel.

The ceramic electrodes are supported on the end of a inner lead wire, for example, in an electrically conductive container having an opening, wherein a
thermo-electron emission substance consisting of granular, spongy or massive compound ceramic, which is which is made of mainly alkaline-earth metal and the transition metal and surface of which is coated with carbide or nitride of transition metals,
is involved.

### <Ionizing Agent>

In order to have the low pressure mercury vapor discharge perform, the ionizing substance shall involve mercury and rare gas. Also, in order to have low pressure rare gas discharge performed, the rare gas such as xenon shall be filled up at a proper pressure.

As to mercury, a liquid mercury is filled in or the amalgam, such as Zn-Hg or Ti-Hg, which is provided with a mercury vapor performance nearly same to liquid mercury, is filled.

In order to fill liquid mercury in, liquid mercury can be degraded in, or liquid mercury is filled in a capsule and the same is filled and the capsule is later broken by proper means to have liquid mercury come out.

Also, in order to fill the amalgam in, the same is formed in pellet or the amalgam can be held on a proper metal plate as a base plate. In other words, in case of the amalgam of Zn-Hg, it is suitable to fill in as pellet. Also, in case of the amalgam of Ti-Hg, it is suitable to hold on a metal plate. The latter is called as mercury discharging alloy and mercury can be discharged by imposing a high frequency wave on the alloy after filling.

Next, rare gas is used as a damping gas and to make the start of the discharge of fluorescent lamp easy, argon (Ar), krypton (Kr), neon (Ne) and the like is filled in the light-transmissive discharge vessel at the pressure of 200 ~ 400 Pa.

Also, as to filling of rare gas, just Ar-gas may be filled in but also a mixed gas such as Ar-Kr, Ne-Ar-Kr or Ne-Ar may be filled in.

### <Method of Regenerating Fluorescent Lamp>

In order to regenerate the fluorescent lamps according to the present invention, it is necessary at least to have a process for recovering fluorescent substance, a process for forming a fluorescent substance layer, a process for forming a light-transmissive discharge vessel and a process for filling the ionizing agent.

Herein after the details are described.

### <Recovering Fluorescent Substance>

The process for recovering the fluorescent substance to be recycled is the process to obtain the fluorescent substance to be recycled by recovering the fluorescent substance from the fluorescents lamp to be recycled.

Also, the process for recovering the fluorescent substance is divided into a process for recovering the fluorescent substance, a refining process for refining the recovered fluorescent and a heat-treating process for obtaining the fluorescent substance for recycling by making heat treatment.

For example, the process for recovering the fluorescent substance is performed as follows:

In other words, the fluorescent lamps to be recycled are recovered; the light-transmissive discharge vessels are cut almost at the center; the fluorescent substance is wiped pout from the inner surface of the glass bulbs or, the fluorescent substance coating is mechanically stripped off with a blower or an air drawer. Or, the fluorescent substance can be also recovered by crushing the light-transmissive discharge vessels.

After recovering the fluorescent substance, the fluorescent substance is separated by removing mercury and glass fragment by means of flotation/precipitation method and the like. By the way, when the fluorescent substance is to be recovered, the fluorescent lamps using the three band emission fluorescent substance and the fluorescent lamps using halo-phosphate fluorescent substance are to be sorted preferably in advance. For it is clear that the characteristics of these fluorescent substances are different. As the degree of deterioration of the fluorescent substance becomes large, as the number of the times of recycling increases, the fluorescent substance can be recovered by classifying the same according to the number of the times recycled.

The recovered fluorescent substance is heat treated and thereafter refined, in case of flotation/precipitation method.

The process for heating the recycled fluorescent substance is performed for separating mercury adhered to the fluorescent substance or separating mercury from the compound of the fluorescent substance and mercury by heating. And then, a recycled fluorescent substance of high luminescence can be obtained by heat-treating the recycled fluorescent substance at this process.

The process for refining the recycled fluorescent substance is to make the large particles of recycled fluorescent substance due to condensation to a proper small size particles, and this process can be performed by screening, milling and the like.

### <Forming Fluorescent Substance Layer>

The process for forming the fluorescent substance layer is the process for forming a fluorescent substance coating using non-recycled fluorescent substance and recycled fluorescent substance on the inner surface of the glass bulbs and for obtaining the fluorescent layer by firing still more.

The fluorescent substance coating can be formed by either dry process or wet process.

In the former case, a coating solution is prepared by mixing the fluorescent substance into the solution of solvent and binder, and, the fluorescent coating solution is coated on the inner surface of the glass bulb, for example, by flowing the solution into the glass bulb from the top to downward or by blowing up the solution from the bottom of the glass bulb, to from a fluorescent substance coating.

In case that the fluorescent substance coating is not to be formed on the both ends of the glass bulb, the end portions which are not to be coated, can be wiped out by buff and the like.

In the latter case, a powder coating process such as an electrostatic coating process can be applied.

The fluorescent substance coating may be either single or plural.

In case of a single layer of the fluorescent substance coating, the fluorescent substance coating is prepared for use by mixing the recycled fluorescent substance and the non-recycled fluorescent substance at a proper ratio.

In case of the layer of a plurality of fluorescent substance coatings, the non-recycled fluorescent substance coating and the recycled fluorescent substance coating are individually coated and formed by coating one on another. By the way, the non-recycled fluorescent substance coating is formed mainly at least from the non-recycled fluorescent substance. Similarly, the recycled fluorescent substance coating is formed mainly at least from the recycled fluorescent substance.

Next, the ratio of the recycled fluorescent substance and the non-recycled fluorescent substance in the total fluorescent substance coating, shall be selected from the viewpoint of preventing the undesired influence for the total luminous flux, luminous color and color rendering of the completed fluorescent lamp. From the viewpoint of the total luminous flux, the mixing ratio of the recycled fluorescent substance can be made larger, the closer the luminescence of the recycled fluorescent substance is to the one of the non-recycled fluorescent substance.

However, as the fluorescent lamps are not recovered by classifying the lamps according to the luminous colors, the recycled fluorescent substance is a mix of the fluorescent substances of the various luminous colors of the fluorescent lamps in the market.

Therefore, in order to limit the color difference within a permissible range, the mixing ratio to the non-recycled fluorescent substance must be set properly, and the ratio must be controlled.

Next, the proper setting of the mixing ratio of the recycled fluorescent substance to the non-recycled fluorescent substance contained in the fluorescent substance layer is described.

For example, in case of the recycled fluorescent substance, as the luminous flux equivalent to about 96 % of the non-recycled fluorescent substance can be obtained, in order to obtain the fluorescent lamp of the total luminous flux equivalent to, for example, 98 % of the total luminous flux of the fluorescent lamps with non-recycled fluorescent substance exclusively, the recycled fluorescent substance may be mixed within the range of 50 weight-% of the total fluorescent substance. In the meantime, in order to execute a practical recycling, at least the recycled fluorescent substance more than 5 weight-% to the total fluorescent substance shall be mixed.

Also, in order to obtain a proper recycled fluorescent lamp, which luminous color and color rendering are closer to the ones of the fluorescent lamps with non-recycled fluorescent substance layer exclusively, besides there is almost no difference in the total luminous flux, the mixing ration shall be preferably set within the range of 30 weight-% to the total fluorescent substance. By the way, in order to increase the mixing ratio of the recycled fluorescent substance, more than 10 % of the recycled fluorescent substance can be mixed to the total fluorescent substance.

Separately from the above, when the luminous color of the recycled fluorescent substance differs from the luminous color of the non-recycled fluorescent lamps, the shorted fluorescent substance of the fluorescent substance can be mixed a little more than required in order to set the color difference of the recycled fluorescent substance off. For example, as the color temperature of a mean luminous color of the recycled fluorescent substances is lower than the one of the daylight color (6700 K), if the fluorescent lamp of non-recycled fluorescent substance is of day time color, an additive of the fluorescent substance of the blue luminous in the non- recycled fluorescent substance is prepared a little higher than the case of the fluorescent substance for 6700 K, and by mixing this additive in the recycled fluorescent substance, a fluorescent lamp having a daylight luminous color (6700 K) as a whole can be obtained.

As similarly, in case that the non-recycled fluorescent lamp is of lamp color, as the color temperature is higher than the lamp color (3000k), fluorescent lamp of lamp color (3000k) as a whole can be obtained, by preparing a fluorescent substance, which color temperature is lower than 3000K, by increasing the amount of red emission fluorescent substance in the non-recycled fluorescent substance and by mixing this into the recycled fluorescent substance.

Next, when the fluorescent substance coating is formed, the fluorescent substance layer is formed by firing the fluorescent substance coating. This fluorescent substance firing process is the process that the binder contained in the fluorescent substance coating is resolved and removed and at the same time solvent is evaporated by heating the glass bulb, in which the fluorescent substance coating is formed, in a heating furnace, for example, up to 600°C, so that a fluorescent substance layer is formed.

### <Forming Light-transmissive Discharge Vessel>

The light-transmissive discharge vessel forming process is the process for forming the light-transmissive discharge vessel by closing the both ends of the glass bulb after enclosing a pair of the electrodes at the both ends of the glass bulb formed with a fluorescent substance layer.

In case a flare stem is used, it becomes easy to fill ionizing agent into the glass bulb in a later process by providing the flare stem with an evacuation piping for enclosing a pair of the electrodes at the both ends of the glass bulb and at the same time for closing the both ends of the glass bulb.

In case that the both ends of the glass bulb are closed by pinch seals, an evacuation piping can be provided on the side of the glass bulb.

When the light-transmissive discharge vessel is to be bent in a ring-shape and the like, a bending process can be performed after the light-transmissive discharge vessel is formed. However, after the bent light-transmissive discharge vessel is formed, the fluorescent substance layer can be formed according to the above mentioned process.

### <Filling Ionizing Agent>

The ionizing agent filling process is the process for filling the ionizing agent into the light-transmissive discharge vessel.

Hereinafter, embodiments to perform the present invention are described.

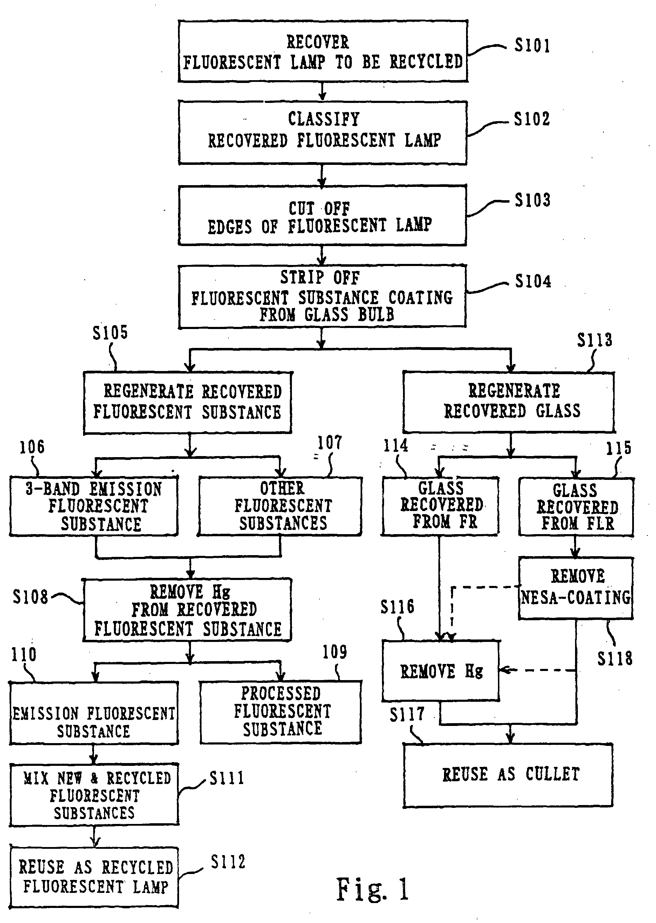

Fig. 1 is a diagram showing the recover-and-regenerating the fluorescent lamp to be recycled. At first, the fluorescent lamps to be recycled (used fluorescent lamps, inferior fluorescent lamps rejected at production process and the like) are recovered (S101)

In this connection, it is supposed that many kinds of the fluorescent lamps are contained in the fluorescent lamps to be recycled.

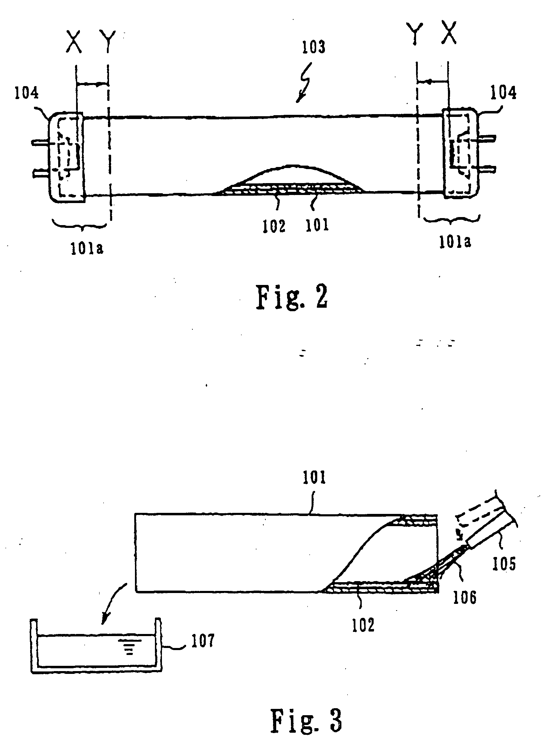

As a typical fluorescent lamps, as shown in Fig. 2, for example, three band fluorescent lamp 103, in which a fluorescent substance coating 102 including a three band emission fluorescent substance is formed on the inner surface of the glass bulb 101, can be raised. As the three band emission fluorescent substances, a hybrid fluorescent substance which is generally mixed with a blue emission fluorescent substance such as an divalent europium-activated aluminate fluorescent substance and a divalent europium-activated halo-phosphate fluorescent substance, a red emission fluorescent substance such as trivalent europium-activated yttrium sulfide, and a green emission fluorescent substance of rare earth elements is used.

Among these fluorescent substances, as the blue emission fluorescent substance especially tends to be deteriorated during the regeneration process, it is important to prevent the deterioration of the performance of the blue emission fluorescent substance. Or, it can be also considered that the blue emission fluorescent substance which tends to deteriorate the performance is removed during the recovering process and that a new fluorescent substance for blue emission fluorescent component (blue emission fluorescent substance) can be used.

Practical examples of the blue emission fluorescent substances used for the three band fluorescent lamp are exemplified by a divalent europium-activated aluminate fluorescent substance having a general formula; a(M,Eu)O · bAl₂ O ₃, and a divalent europium-activated halo-phosphate fluorescent substance having a general formula; (M,Eu)₁₀(PO₄)₆ · Cl₂. In these formulas, M denotes at least one element among Mg, Ca, Sr and Ba; a and b are given by following relations; a > 0; b > 0; 02 ≦ a /b ≦ 1.5.

However, it can be considered that the fluorescent lamps to be recycled involve not only the above mentioned three band fluorescent lamps but also, for example, the fluorescent lamps which use halo-phosphate fluorescent substance alone. Also, the three band fluorescent lamps involve the daylight lamp and the lamps of a whitish daylight lamp, and the fluorescent substances used are different. For these fluorescent lamps of the different types or qualities, it is desired to apply the different processes in accordance with the compositions (for example, fluorescent substance).

Furthermore, the three band fluorescent lamps are classified into a general fluorescent lamps (FL) and a rapid start type fluorescent lamps (FLR) and the constructions of the glass bulbs are different between the both types. In such a case, it is desired to apply a process in accordance with the construction of the glass bulbs.

Therefore, the recovered fluorescent lamps are classified according to the kinds and types (S102). In the classification process of the fluorescent lamps to be recycled, the classification in accordance with the fluorescent substances used for the fluorescent lamps and furthermore the classification in accordance with FL and FLR are performed. As the classification of the fluorescent substances, for example, a method that a light source that emits a ultraviolet radiation of the wavelength under 365 nm is arranged on the outside of the glass bulb arranged, having this light source irradiated the ultraviolet radiation on the fluorescent lamp to excite the fluorescent substance, and the type of the fluorescent lamps is judged by the excited light, can be raised. According to such a method, an automatic classification of the fluorescent lamps to be recycled is possible.

For example, the ultraviolet radiation with a the wavelength of 300 nm transmits the glass bulb and excites the fluorescent substance coating on the inner surface of the same. As the blue emission fluorescent substance emits a light by means of such excitation by the ultraviolet radiation, by detecting the spectrum of the emitted light, the classifications of the fluorescent lamps for regeneration, classification between three band fluorescent lamps and the halo-phosphate luminous fluorescent lamps and further the classification according to the daylight color type and the whitish daylight lamp among the three band fluorescent lamps can be performed.

However, in the case of the classification process using the ultraviolet radiation of the wavelength 300 nm, it is difficult to classify the incandescent light fluorescent lamp, in which the additive for blue emission fluorescent substance is little, and also in the case of green or red emission fluorescent lamps (uni-color fluorescent lamps) which hardly emit light, it is difficult to distinguish the same from the three band fluorescent lamps and further classification as the individual lamps is difficult. In such a case, as described later, after the edge portions of the fluorescent bulb to be recycled are cut off, the kind of the fluorescent lamp to he recycled can be classified by inserting the ultraviolet radiation lamp that radiates a ultraviolet radiation of wavelength of 254 nm into the glass bulb and having the fluorescent substance emitted by the ultraviolet lamp located in the glass bulb.

In detail, by having an ultraviolet radiation lamp (for example, pen-shape ultraviolet radiation lamp) which is housed in the glass bulb irradiated an ultraviolet radiation of the wavelength of 254 nm onto the fluorescent substance coating and the emission from the fluorescent substance coating is detected on the outside of glass bulb. And, the fluorescent lamps to be recycled can be classified according to kind and quality, by detecting the luminous spectrum emitted from the fluorescent substance coating (B, G, R and luminous spectrum of the halo-calcium phosphate fluorescent substance and the like), and by specifying the kind of the fluorescent substance, even in case of the fluorescent lamps which contain little additive of blue emission fluorescent substance. For detecting the emitted spectrum, for example, an instantaneous spectroscope system using a CCD camera can be used.

Furthermore, the three band fluorescent lamps are classified n to a general fluorescent lamps (FL) and the rapid start type fluorescent lamp (FLR). In other words, in case that the fluorescent lamps to be recycled are of the rapid start type, the inner surface of the glass bulb is provided with a tin oxide coating as Nesa coating, and as it is necessary to recover the glass bulb as raw glass material (cullet), after this tin oxide coating is removed in a separate process, the fluorescent lamps of the rapid start type are distinguished from the general fluorescent lamps.

The classification process of the rapid start type fluorescent lamps to be recycled can be performed by based on one of (1) classification based on the result of recognition, which is executing by image processing of the identification mark such as the mark or the name designated to the type of the lamp printed on the lamps; (2) classification based on the measuring result of the resistance of the glass bulb, which is measured, for example, from the outside of the glass bulb and the like.

In this connection, in the case of the above described method, there might be a case that the accuracy of discrimination by means of image processing degrades, when the edges of the glass bulb has become black because of aging or the identification mark itself has vanished. On the contrary, the rapid start type fluorescent lamps to be recycled can be more surely classified according to the method (2), in which resistance of glass bulb is measured. In detail, when the resistance of the glass bulb is measured around the center of glass bulb, and the measured result is under the specified value, the fluorescent lamps can be judged as of the rapid start type, in other words, as the fluorescent lamp, of which resistance of glass bulb has become low due to the tin oxide coating, which exists as Nesa coating.

By the way, the measurement of the resistance of the glass bulb can be performed not only by means of non-destructive measurement, but also various methods such as a method by measuring directly the resistance of the inner surface of glass bulb after the fluorescent substance is removed, or a method by measuring the resistance by crushing the glass bulb and the like can be adopted. However, when considering the easiness of the process afterwards, it is desirous to perform a non-destructive measurement from the outside in advance. Also, it is also possible to judge, whether or not a tin oxide coating exists on the inner surface of the glass bulb, through the deviation of electric current, voltage and phase by influencing the high frequency voltage by bringing the electric conductive terminal toward the outer surface of the lamp.

The fluorescent lamps to be recycled, which type or class is discriminated through the classification process as described above, are separated into the fluorescent substance and the glass material and are recovered as recycling materials respectively. When the fluorescent substance is separated and recovered from the fluorescent lamp to be recycled, as shown in Fig. 2, the ends of bulb 101a including the bulb bases 104 of the fluorescent lamp 103 are cut off respectively

In this connection, as there might be the case that the end portions of the glass bulb 101a are often colored to black brown, and also the materials for electrode might be scattered, the fluorescent substance existing in these portions are deteriorated in luminescence and reflectance. Therefore, it is desirous to cut off the ends of the glass bulb at the position Y in the range between the position apart inwardly from the position of electrode X by more than 10 mm and the position around less than 100 mm from the ends of the glass bulb of the fluorescent lamp 103 to be recycled. By such means, the performance of the regenerated fluorescent substance can be improved further.

By the way, in case that the glass bulb ends are not colored black-brown and in the case that the colored substance can be removed at a later process, even which the glass bulb ends are colored black-brown, the glass bulb 101 may be cut off at the end portions and can be sent to the next process.

Next, by stripping off the fluorescent substance coating 102 from the inner surface of the glass bulb 101, which both ends 101a and 101a are cut off, the fluorescent substance and glass material are individually recovered from the fluorescent lamp to be recycled (S104). This separating process is executed based on the result of classification process of the fluorescent lamps to be recycled to individually recover the fluorescent substances and/or the glass materials of each type of the lamps. For example, as to the fluorescent substance, three band emission fluorescent substance and halo-calcium phosphate emission fluorescent substance are individually recovered.

The recovery of the fluorescent substance from the fluorescent lamp to be recycled can be performed by blowing a high pressure air to the inner surface of the glass bulb to strip off the fluorescent substance coating, or by vacuum sucking to strip off the fluorescent substance coating. However, it is difficult to recover the fluorescent substance coating from the inner surface of the glass bulb completely by such a stripping-off method and there might be further an apprehension that impurities such as metal component and foreign material may mix in and the performance of the recovered fluorescent substance (such as luminescence) may be deteriorated.

Therefore, as shown in Fig. 3, it is desirous to recover the fluorescent substance by spraying a pressurized fluid 106 through a nozzle 105 to the inner surface of the glass bulb. The fluorescent substance is recovered together with liquid 106 into the storage pan 107. As described above, the recovery efficiency can be improved by preventing the mixing of impurities and foreign material by spraying a pressurized fluid on to the fluorescent substance coating 102 formed in the inner surface of the glass bulb 101 and by stripping off the fluorescent substance coating 102 by the fluid.

As to the fluid for spraying to the fluorescent substance coating 102, water, acid, alkali solution and the like can be used. As to the water, either cold water or warm water may be used. Also as to acid, a water acid solution less than pH=6 including at least one of nitric acid, hydrochloric acid and acetic acid, is used. As to alkaline solution, water solution of NaOH or Ca(OH)2 more than pH=8 is used. As these acids and alkaline solutions have an activity to solve the binding material in the fluorescent substance coating 102, the recovery efficiency can be increased still more. In order to obtain such an effect, it is preferable to spraying especially an acid onto the fluorescent substance coating.

Also, when the fluorescent substance coating 102 is stripped off by the fluid 106, for example, it is also effective to spray the fluid 106 by varying the pressure in pulsation. Such a pressure fluctuation acts effective to the separation of the fluorescent substance coating 102. Furthermore, after the process spraying fluid 106, the remaining fluorescent substance coating 102 on the inner surface of the glass bulb 101 may be separated mechanically by brushing or by sand blasting. By adopting the both hydraulic pressure and mechanical force in combination, the recovery efficiency of the fluorescent substance can be increased still more. By the way, depending upon the case, just a mechanical separation may be applied.

The above mentioned separating and recovering process of the fluorescent substance is performed for each type or class of the fluorescent lamps to be recycled, depending upon the result of the aforementioned classification process. In other words, by executing the classification process according to the sore and the quality of the fluorescent lamps to be recycled, the every types of the fluorescent substances (for example, three band emission fluorescent substance and halo-calcium phosphate emission fluorescent substance) are individually recovered.

Thus, the fluorescent substances individually recovered from each type of the fluorescent lamps, i.e., recovered fluorescent substances, undergo a regeneration process (S105), after a washing with water, drying etc. are performed. The regeneration is individually performed for every groups of fluorescent substances divided with the varieties of the fluorescent substances, e.g., two groups of a three band emission fluorescent substance and other fluorescent substances (for example, halo-calcium phosphate fluorescent substances). By the way, when a water washing is applied to the recovered fluorescent substance, it is effective, when classification is made using water screen. This method is effective for removing the foreign material. Also, any physical and mechanical removing process for removing impurities and foreign material such as filtration may be performed.

In the recovery process for the recovered fluorescent substance, at first a process (A108) for removing mercury contained in the recovered fluorescent substance is executed. As to the process for removing mercury, for example, floatation process, pickling process, heating process and the like can be raised. In case of the floatation process, the recovered fluorescent substance is added to a dispersing medium such as city water, pure water and water prepared for a weak acidity to have the recovered fluorescent substance into the dispersing medium dispersed while agitating slowly. And, while impurities such as mercury, emitter- scattered substance and foreign material such as glass fragment are separated from the fluorescent substance, the fluorescent substance, which specific weight is light, is recovered by overflowing. Also, pickling process is the process that fluorescent substance and the glass cullet are washed with an acid solution such as a thin nitric acid solution or ascetic acid and are then dried. The acid solution may be a solution of hydrochloric acid, sulfuric acid or oxalic acid.

Though mercury can be removed to a certain extent, just by the floatation process described above, it is desirable to use also a firing process in combination to increase the rate of removing of mercury,. By the way, it is also possible to remove mercury from the recovered fluorescent substance just by firing process. The firing process is executed by firing the recovered fluorescent substance in a firing furnace, and it is possible to remove mercury mixed in the recovered fluorescent substance more surely. Also, it is also possible to remove the organic substance, for example, a binding component for the fluorescent substance coating contained in the recovered fluorescent substance.

The heating process described above may be executed in any ambience, the atmosphere, vacuum, reducing atmosphere or inert atmosphere, the heating temperature shall be preferably lower than 400 °C, e.g., 100 ~ 300°C. Though it is possible to remove mercury just by heating in the atmosphere, as there is an apprehension that the rate of removing mercury might not be enough in case of under 400°C, it is desirable to execute the heating process in combination with a firing process in other ambience such as in vacuum, in the reducing atmosphere, in an inert atmosphere.

The heating of the recovered fluorescent substance in the atmosphere is effective to remove organic substances such as binding component. As the performance of the recovered fluorescent substance will be deteriorated, if the temperature is too high in this case, it is desirable to set the heating temperature under 400°C. As the efficiency removing the organic substance will degrade, when the firing temperature is too low, it is desirable to set the firing temperature above 100°C. The heating in the atmosphere can be eliminated, if the organic substance can be removed fully, when the fluorescent substance coating is stripped off by spraying a fluid. Also, it is also possible to remove the organic substance at the washing process described later.

In case that the recovered fluorescent substance is fired in a vacuum, in a reducing atmosphere or in an insert gas atmosphere, though it is also possible to execute the firing process at a temperature over 600°C, it is desirable to execute the firing process in the range of 400 ~ 600°C, in order to prevent the thermal deterioration of the fluorescent substance. The firing process of the recovered fluorescent substance in a vacuum, in a reducing atmosphere, or in an inert atmosphere is executed for removing mercury and, if the firing temperature exceeds 600°C, there will be an apprehension that a deterioration of the recovered fluorescent substance may be caused and, on the other hand, if the firing temperature is less than 400°C, the removing efficiency of mercury may degrades.

As described above, by removing mercury through the firing of the recovered fluorescent substance in a vacuum, in a reducing atmosphere, or in an inert atmosphere, the deterioration of the performance of fluorescent substance caused by oxidation can be prevented. Especially, the degradation of the luminescence efficiency of the blue emission fluorescent substance contained in three band emission fluorescent substance (alminate fluorescent substance activated by divalent Eu and halo-phosphate fluorescent substance activated by divalent EU) and further the degradation of the light emitting performance can be prevented to a large extent. Furthermore, as the firing temperature necessary for removing mercury can be lowered by firing in a vacuum or in an inert atmosphere, the thermal deterioration of the fluorescent substance can be prevented. By these countermeasures, the recovered fluorescent substance keeping the performance can be obtained with a good repeatability.

As to the practical firing atmosphere for firing the recovered fluorescent substance, a vacuum under 10 Pa, a reducing atmosphere using a forming gas (N2 + H2) or an inert atmosphere such as Ar or He is desirable. When the atmosphere pressure exceeds 10 Pa in case a vacuum atmosphere is applied, it might cause an oxidation of the fluorescent substance. Among the respective atmospheres mentioned in the above, especially a reducing atmosphere using a forming gas is effective for preventing the oxidation of the fluorescent substance.

By the way, the various conditions for the firing process mentioned in the above are supposed for mainly the three band emission fluorescent substance 106 and as to the other fluorescent substance 107 (for example, halo-calcium phosphate fluorescent substance), mercury is removed by firing under 1000°C. The fluorescent substance 107 other than the three band emission fluorescent substance after the firing is reused as processed fluorescent substance 109 or otherwise disposed.

By executing the firing process as described above, the recycled fluorescent substance which can be used for the three band fluorescent lamps can be obtained, however, it is preferable to further execute a washing process for the fluorescent substance using acid solution, alkaline solution, alkali-halide solution and the like. It is possible to improve the performance of the recycled fluorescent substance still more by executing the firing process and washing process in combination.

As the acid solution to be used for the washing process, nitric acid, a water solution of pH below 6 which includes at least one selected from nitric acid, hydrochloric acid and acetic acid, is used. Also, as the alkaline solution, a water solution of NaOH or Ca (OH)2 of pH above 8, is used. Furthermore, a solution of hypochlorite such as sodium hypochlorite, potassium hypochlorite and the like, or a solution of periodate compound such as ammonium periodate, potassium periodate (alkali halide) may be used. These solutions display especially the effect in removing organic matter.

The acid solution is effective not only for removing organic matter but also for solve-and-removing the blue emission fluorescent substance. Though the deterioration of the blue emission fluorescent substance can be prevented according to the firing process as described above, the blue emission fluorescent substance tends to deteriorate easily compared to red or green emission fluorescent substances. Therefore, a three band emission fluorescent substance, which luminous performance and the like are improved still more (a mixture of recycled emission fluorescent substance and a new emission fluorescent substance), can be obtained by removing the blue emission fluorescent substance only by acid cleaning and by replacing the part with a new blue emission fluorescent substance and mixing.

Also, in case that washing process is executed, an ultrasonic wave washing can be combined. The ultrasonic wave washing can be performed using warm water. It is not limited that this washing process is performed after the firing process is performed, but also the firing process can be performed after the recycled emission fluorescent substance is washed.

Thereafter, by performing a water washing process and a drying process on the emission fluorescent substance, which has been processed by a flotation separation process, a firing process and also a washing process with an acid or an alkaline solution as the case may be, the recycled emission fluorescent substance in a powder form (recycled three band emission fluorescent substance 110) is obtained. By the way, as in this step still rough particles such as cohesive mass is involved, it is preferred that the substance is dispersed repeatedly by a ball mill and the like as the case may be.

The recycled emission fluorescent substance powder, which is obtained through the recovery and regeneration processes as described above (for example, a recycled three band emission fluorescent substance 110) is mixed with a new fluorescent substance (S111) at need and then is reused as the fluorescent substance coating forming material for the fluorescent lamp (S112). The mixing ratio of the recycled fluorescent substance and a new fluorescent substance is not limited specially, but, for example, is set so that the recycled fluorescent substance is contained in the range of 1 ~ 100 %. In case that the recycled fluorescent substance is regarded as important, the ratio shall be set in the range 50 ~ 100 % preferably.

And then, according to the recovery and regeneration processes as described above, at first, as the recovery process is excellent in the recovery efficiency of the fluorescent substance, almost nearly 100 % of fluorescent substance can be recovered from the fluorescent lamps to be recycled, therefore, the recycling ratio of the fluorescent substance can be improved to a large extent. Furthermore, the recycled fluorescent substance is prevented from the mixing of impurities and foreign material at the recovery and also the deterioration of the performance through the firing process is prevented, deterioration of the performance (such as a degradation of the luminescence) can not be caused, when the same is reused for the fluorescent lamps. As described above, according to the present invention, recycled emission fluorescent substance powder of a high performance can be obtained surely with a good efficiency.

Also, the glass material which was separated at the separating-recovering process S104, namely, the glass bulb is reused as cullet after the same is crushed; however as mercury contained in the glass bulb may cause inferior goods, the glass is reused after the recovery process is performed (113). Especially, in the case that the fluorescent lamps to be recycled is of the rapid start type, as a tin oxide coating as Nesa-coating exists on the inner surface of the glass bulb, it is necessary to reuse the same, after the same is processed by a corresponding recovery process.

In light of the foregoing, the recovery of the glass material is performed in accordance with the kind of the fluorescent lamps in such a manner that a general fluorescent lamps (FL) and the fluorescent lamp of rapid start tyOpe (FLR) are distinguished. The glass material 114 which was recovered from the general fluorescent lamps (FL) is processed with a mercury removing process S116. The process for removing mercury from the glass material, is performed by (1) immersing the recovered glass bulb into a nitric acid solution after crushing, or by (2) heating the recovered glass material up to around 500 °C after crushing and the like.

According to the (1) immersing process into a nitric acid solution, as mercury adhered to the glass bulb or contained in the glass bulb dissolves into the nitric acid solution, mercury can be removed effectively from the recovered glass material. The nitric acid solution may be warmed up at need. In case that the glass material is processed with a nitric acid solution, for example, mercury dissolving value can be set under 0.005 g/L. Also, mercury dissolved into the nitric acid solution can be recovered as a mercury vapor, for example, by reducing with tin chloride and further by evaporating the same. Also, according to (2), the heating process, mercury can be recovered satisfactorily from the recovered glass material.

As the inferior product due to segregation of impurities can be prevented by performing mercury removing process on the glass material (component of the glass bulb) produced during the recovery process of the fluorescent lamp to be recycled, in case that the recovered glass material is reused as cullet, the quality of the recovered glass material can be improved to a large extent. In other words, the recovered glass material can be reused satisfactorily (S117).

Also, the glass material 115 recovered from the rapid start type fluorescent lamps (FLR) is processed for removing a tin oxide coating (Nesa-coating) from the inner surface of the glass bulb (S118). The glass bulb, from which tin oxide coating is removed, can be used as cullet (glass material) after crushing, same as in the case of the glass material produced from general fluorescent lamps (117).

The process for removing tin oxide coating can be performed for example, (1) by removing tin oxide coating by heating the glass bulb in a reducing atmosphere, or (2) by dissolving the tin oxide coating by processing the recovered glass bulb with an acid or an alkaline solution. The heating process in a reducing atmosphere can be executed, for example, by heating the inner surface of the glass bulb with reducing flame (for example, flame of hydrogen burner).

The removal o f tin oxide coating by means of acid or alkaline processing, can be executed using, for example, hydrogen fluoride, hydrochloric acid, sulfuric acid, sodium hydroxide solution, magnesium hydroxide solution and the like. Especially according to the process with hydrogen fluoride, the tin oxide coating can be removed more surely as the glass bulb can be also dissolved partly.
Also, the protective coating consisting of aluminum oxide, zinc oxide, titan oxide adhered to glass can be removed satisfactorily.

Also, when the processing is executed using acid solution such as hydrochloric acid, sulfuric acid and the like, alkaline solution such as sodium hydroxide solution, magnesium hydroxide solution and the like, it is preferable to heat up these solutions up to around 180 ~ 200 °C, and to process the crushed glass bulb under the atmosphere pressurized, for example, up to 120 kPa. According to such processes, the tin oxide coating and the protective coating can be removed satisfactorily. Furthermore, the evaporation and scattering of the acid solution and the alkaline solution can be prevented.

Also, by executing the removal of tin oxide coating as described above, mercury adhered to or contained in the glass bulb can be also removed. However, the removal process of mercury S116 may be executed separately as the case may be.

As described above, the glass material recovered from the rapid start type fluorescent lamp (FLR) 115 and the glass material recovered from the typical fluorescent lamps (FL) can be reused satisfactorily as well. This fact contributes to the improvement of the recovery efficiency of the glass material.

Next the detailed embodiment of the present invention and its evaluation are described below.

At first, the fluorescent substance was recovered from the used fluorescent lamp (three band fluorescent lamp), after the same was washed with water to remove the impurities, the same was heated up under vacuum of 10 Pa in a vacuum oven. The heating process was executed at the condition of 550 °C x 3 hours.

When the fluorescent bulb was manufactured using the obtained recycled fluorescent substance, a luminous flux of 96 % could be obtained in comparison to the fluorescent lamp using a new fluorescent substance, and it was confirmed that the recycled fluorescent substance had a satisfactory performance as the recycled one.

Also, as to the remaining mercury the dissolved value was under 0.005 mg/L and guidelines for industrial wastes was cleared. As described above, it was confirmed that mercury was also removed satisfactorily.

### Example 2:

The fluorescent substance was recovered from the used fluorescent lamp (three band fluorescent lamp), after the same was washed with water to remove the impurities, the same was heated up in an oven with nitrogen atmosphere. The heating process was executed at the condition of 600 °C x 5 hours.

When the fluorescent bulb was manufactured using the obtained recycled fluorescent substance, a luminous flux of 94 % could be obtained in comparison to the fluorescent lamp using a new fluorescent substance, and it was confirmed that the recycled fluorescent substance had a satisfactory performance as the recycled one.

Also, as to the remaining mercury the dissolved value was under 0.005 mg/L and guidelines for industrial wastes was cleared. As described above, it was confirmed that mercury was also removed satisfactorily.

### Example 3:

The fluorescent substance was recovered from the used fluorescent lamp (three band fluorescent lamp), after the same was washed with water to remove the impurities, the same was charged into a firing furnace and was heated in a stream of the forming gas (N₂ : 97 % + H₂ : 3 %). The heating process was executed at the condition of 550 °C x 3 hours.

When the fluorescent bulb was manufactured using the obtained recycled fluorescent substance, a luminous flux of 95 % could be obtained in comparison to the fluorescent lamp using a new fluorescent substance, and it was confirmed that the recycled fluorescent substance had a satisfactory performance as the recycled one.

Also, as to the remaining mercury the dissolved value was under 0.005 mg/L and guidelines for industrial wastes was cleared. As described above, it was confirmed that mercury was also removed satisfactorily.

### Example 4:

The fluorescent substance was recovered from the used fluorescent lamp (three band fluorescent lamp), after the same was washed with water to remove the impurities, the same was charged into a firing furnace and was heated in the atmosphere. The heating process was executed at the condition of 450 °C x 2 hours. By firing in the atmosphere, organic matter was removed. Next, the recovered fluorescent substance was charged into a vacuum oven and was heated in a vacuum under 10 Pa. The heating process was executed at the condition of 550 °C x 3 hours.

When the fluorescent bulb was manufactured using the obtained recycled fluorescent substance, a luminous flux of 97 % could be obtained in comparison to the fluorescent lamp using a new fluorescent substance, and it was confirmed that the recycled fluorescent substance had a satisfactory performance as the recycled one.

Also, as to the remaining mercury the dissolved value was under 0.005 mg/L and guidelines for industrial wastes was cleared. As described above, it was confirmed that mercury was also removed satisfactorily.

### Example 5:

The fluorescent substance was recovered from the used fluorescent lamp (three band fluorescent lamp), after the same was washed with water to remove the impurities, the same was charged into a firing furnace and was heated in a stream of the forming gas (N₂: 97 % + H₂: 3 %). The heating process was executed at the condition of 550 °C x 3 hours. Next, the fired fluorescent substance was washed in a water solution of nitric acid or acetic acid. Thereafter, The same was washed in a warm water of 40 °C by means of supersonic washing, and further after filtration, washing in water and drying processes were performed, the respective recycled fluorescent substances were obtained.

The remaining mercury and the reflectance of the obtained recycled fluorescent substance were measured. The fluorescent substance put into a nitric acid solution after the heating process had the remaining mercury under the detectable limit, and the reflectance was 98 %, and the fluorescent substance put into an acetic acid solution after the heating process had the remaining mercury under the detectable limit, and the reflectance was 95 %. By the way, in the case of the fluorescent substance just processed by the heating process, the remaining mercury was 0.03 mg/g and the reflectance was 93 %. By the way, the reflectance rate is a relative value assuming that the reflectance rate of a new fluorescent substance is 100.

When the remaining mercury and the reflectance rate were measured for the remaining mercury of the recycled fluorescent substance just processed with water washing in comparison with the present invention, the remaining mercury was 0.08 mg/g and the reflectance rate was 90 %. By the way, the remaining mercury of the recycled fluorescent substance which is not processed was 0.26 mg/g and the reflectance rate was 85 %.

### Example 6:

The fluorescent substance was recovered from the used fluorescent lamp (three band fluorescent lamp), 20g of the fluorescent substance was put into a water of 2 liters in a container and the water was agitated slowly so that the fluorescent substance may not be precipitated. And the, the fluorescent substance was recovered, while having water of about 400 mL/min overflowed and was filtered and dried.

When the remaining mercury and the reflectance of the obtained recycled fluorescent substance were measured, the remaining mercury was about less 1/5 compared to the one of the recycles fluorescent substance which was not processed with a flotation process. This means that the dissolved value of less 0.005 mg/L can be satisfied.

### Example 7:

The both ends of the used fluorescent lamp (three band fluorescent lamp) was cut out. On the inner surface of the glass bulb, which both ends were cut off, water, thin nitric acid or thin acetic acid solution was sprayed with a pressure and the fluorescent substance was recovered respectively. When the fluorescent lamp were manufactured using these recovered fluorescent substances respectively, the reflectance rate of the fluorescent substance recovered using water was 80 % in comparison to the one of the new fluorescent substance and of the fluorescent substance recovered with a thin nitric acid solution was 90 % and of the fluorescent substance with an acetic acid solution was 85 %.

By the way, in order to observe the difference of luminous flux depending upon the difference of the recovering conditions, the fluorescent lamps were manufactured using the recovered fluorescent substances, it is clear that the luminous flux can be improved still more by executing the recovery processes as shown in the Examples 1 ~ 5. Also, in any case, the recovery rate of the fluorescent substance was satisfactory.

### Example 8:

The both ends of the used fluorescent lamp (three band fluorescent lamp) was cut out. In this case, the glass bulb which was cut off at 15 mm from the position of the electrodes and the glass bulb which was cut off at 5 mm from the position of the electrodes were prepared. The fluorescent substances was recovered from the respective glass bulbs, and the luminescence and the reflectance were measured for the respective fluorescent substances, after the same were processed with the recovery process. As the result, the luminescence was 90 % and the reflectance was 95 % and the reflectance was 95 % for the glass bulb which was cut at 15 mm apart from the positions of the electrodes. On the other hand, the luminescence was 88 % and the reflectance was 90 % for the glass bulb which was cut at 5 mm apart from the positions of the electrodes. These values are the relative values, when the values for a new fluorescent substance are assumed as 100 %.

### Example 9:

The glass bulb was recovered from the used fluorescent lamps (FL) and the same is immersed in a sulfuric acid solution after the same was crushed. Furthermore, mercury was reduced by heating the same with tin chloride and was recovered as vapor. When the remaining mercury in the glass material after the immersion in the sulfuric acid solution was measured, the dissolved value satisfied the value of less than 0.006 mg/L.

### Example 10:

The glass bulb was recovered from the used fluorescent lamp (FL) and the same was heated under the condition of 500 °C x 10 minutes (Sample 1) and of 500 °C x 60 minutes (Sample 2) in the atmosphere after the glass bulb was crushed. While the dissolved value of mercury from the glass material which was not processed with the heating process was 0.1 mg/L, the dissolved value of mercury of the both Samples 1 and 2 which were processed with the heating process was under 0.005 mg/L.

### Example 11:

The glass bulb was recovered from the used rapid start type fluorescent lamp (FLR), the same was processed with the heating process under the condition 500 °C x 60 minutes in a reducing atmosphere, after the glass bulb was crushed. When the state of the glass material after the heating process was checked, it was confirmed that the tin oxide coating is removed satisfactorily.

### Example 12:

The glass bulb was recovered from the used rapid start type fluorescent lamp (FLR), the same was processed with the tin oxide coating removing process by immersing the same into hydrogen fluoride solutions of various concentrations, after the glass bulb was crushed. The concentrations of the hydrogen fluoride were 5 %, 1 %, 0.5 %, 0.07 %, and the immersing times were 10 seconds, 3 minutes, 5 minutes, 2 hours respectively. If any of the processing conditions, it was confirmed that the tin oxide coating and the protective coating were removed satisfactorily.

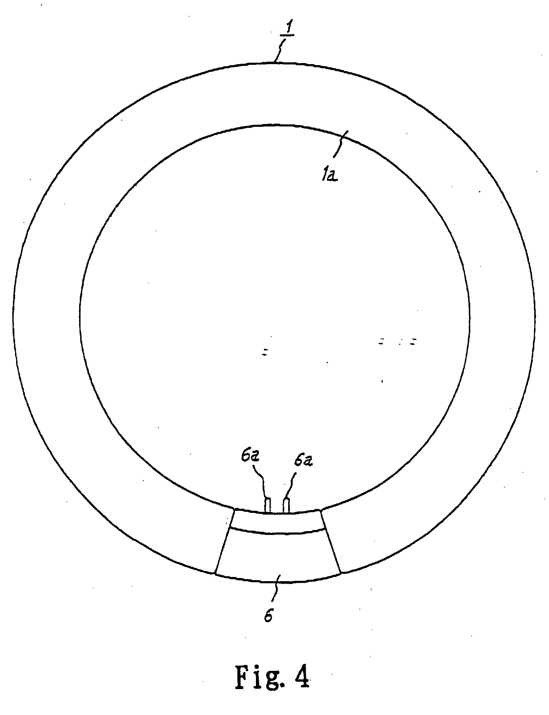

Fig. 4 shows the front elevation of the fluorescent lamp regenerated by the method according to the second embodiment of the present invention.

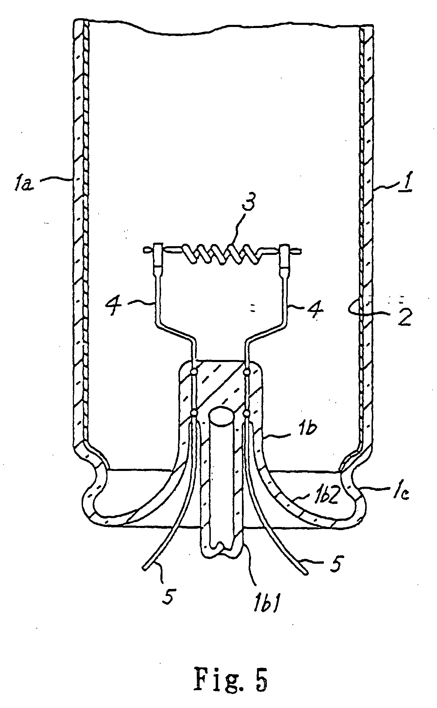

Fig. 5 is an enlarged section showing a part of Fig. 4.

In Figs. 4 and 5, 1 denotes a light-transmissive discharge vessel, 2 denotes a fluorescent substance layer, 3 denotes electrodes, 4 denotes a inner lead-wire, 5 denotes an outer lead-wire and 6 denotes a bulb base.

### <Construction of Fluorescent Lamp>

The fluorescent lamp of the present embodiment is a ring type fluorescent lamp, Type-FCL30S, the diameter of the light-transmissive discharge vessel 1 is 29 mm, the outer diameter of the ring is 225 mm and the inner diameter of ring is 167 mm.

### <Light-transmissive Discharge Vessel 1>

The light-transmissive discharge vessel 1 comprises a pair of flare stems 1b and the end part 1c which forms the sealing for the end, forms a grip for bending.

The glass bulb 1a is made of soda lime glass and forms almost a ring form which outer diameter is 225 mm and inner diameter is 167 mm.

The pair of the flare stem 1b are made of load glass and each of them is provided with an evacuating piping 1b and a flare 1b2 and encloses a pair of inner lead wires and outer lead wires.

The evacuating piping 1b1 is chipped off at the base end and the top end is communicated with the inner side of the light-transmissive discharge vessel 1.

The flare 1b2 forms a air tight light-transmissive discharge vessel 1, which are sealed at the both ends of the long tube 1a.

The inner lead wires 4 and the outer lead wires 5 are connected in the flare stem 1b with dumet wires and a air tightness is kept for the flare stem.

The evacuating piping 1b1 shown in Fig. 5 is closed after the light-transmissive discharge vessel is evacuated and filled in.

### <Fluorescent Substance Layer 2>

The fluorescent substance layer 2 comprises a three band emission fluorescent substance and the same is made by mixing non-recycled fluorescent substance and the recycled fluorescent substance at the ratio of 7 : 3, and the layer is formed on the inner surface side of the light-transmissive discharge vessel 1.

As to the non-recycled fluorescent substances, the one for blue emission fluorescent substance is BaMgAl₁₆O₂₇ : Eu, Mn and the one for green emission fluorescent substance LaPO₄ : CeTBb, and the one for the red emission fluorescent substance is Y₂O₃ : Eu.

### <Electrode 3>

The electrodes 3 is of double coiled filament and are connected to the top ends of a pair of inner lead wires 4.

### <Bulb Base 6>

The bulb bases 6 comprise plastic parts formed in two pieces, and are mounted bridging the both ends of the light-transmissive discharge vessel 1 so that a ring is formed together with the light-transmissive discharge vessel. Also, the bulb base is provided with four bulb base pins 6a protruding from the center to the inside of ring inclined downwardly, and the respective bulb base pin 6a are connected to the 4 lines of outer lead wires 5 which are lead out of the flare stem 1b from the pair of electrodes 3.

### <Ionizing Agent>

The ionizing agent is liquid mercury and argon Ar filled in the light-transmissive discharge vessel 1 at the pressure of 330 Pa.

### <Regeneration of Fluorescent Lamp>

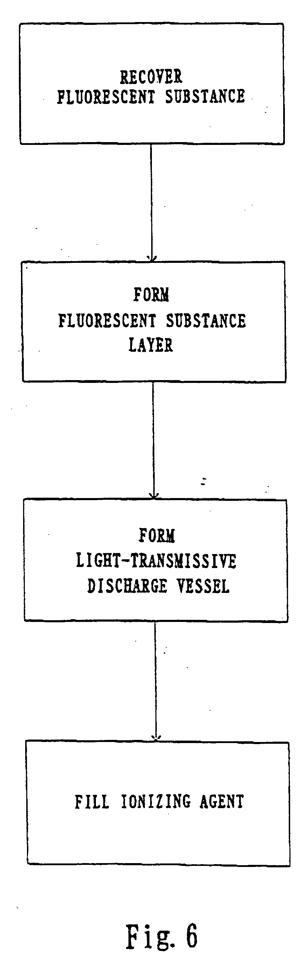

Fig. 6 is a flowchart showing the method according to the second embodiment of the present invention.

Hereinafter the respective manufacturing steps in Fig. 6 are described.

### <Recovering Fluorescent Substance>

The recovering process of the recycled fluorescent substance is the process to obtain refined recycled fluorescent substance, wherein the light-transmissive discharge vessel of the recovered fluorescent lamp is cut almost at the center; the fluorescent substance is mechanically stripped off from the glass bulb to recover the fluorescent substance; mercury and fragment of glass are removed by a floatation precipitation method; after removing water and heating up to 600 °C, the substance is screened using mesh, and the size is adjusted by milling.

### <Forming Fluorescent Substance Layer>

As described above, a luminous fluorescent coating solution was prepared, wherein the non-recycled fluorescent substance and the recycled fluorescent substance were mixed at the weight ratio of 7 : 3 into the solution made of water and binder.

Next, the solution is flown into the glass bulb la to form a fluorescent substance coating, and further the fluorescent substance coating at the both ends of the glass bulb 1a were removed.

The glass bulb, in which fluorescent substance coating was formed, was fired in an oven at bout 600 °C, so that the fluorescent substance layer 2 was formed while the binder was decomposed and removed.

### <Forming Light-transmissive Discharge Vessel>

By attaching the flare stem 1b supporting a pair of the electrodes 3, namely the flare stem electrodes construction to the both ends of the glass bulb 1a, the both ends of the glass bulb were closed, and a pair of the electrodes 3 were enclosed so that a light-transmissive discharge vessel was formed.

Next, the light-transmissive discharge vessel 1 was heated in a furnace up to about 700 so that the glass was softened and was wound around a mold (not shown) to form almost a ring.

### <Other Processes>

The inside of the light-transmissive discharge vessel 1 is evacuated through the evacuating piping 1b1 and then mercury was degraded in and argon is filled, then the evacuating piping was closed and cut off to obtain a fluorescent lamp.

### <Performance of Fluorescent Lamp>

The ring type fluorescent lamp obtained as described above, has a luminous flux of about 99 % compared to the one of the fluorescent lamp manufactured using just non-recycled fluorescent substance, and was not inferior at all. By the way, the total luminous flux of the fluorescent lamp which used the recycled fluorescent substance only was 66 %.

Also, the total luminous flux of the fluorescent lamp which used only the recycled fluorescent substance, which mercury and glass fragment were removed by a floatation precipitation method, was 88 %.

Further, the total luminous flux of the fluorescent lamp which used only the recycled fluorescent substance, which was processed with a heating process method, was 90 %.

Still furthermore, the total luminous flux of the fluorescent lamp which used only the recycled fluorescent substance, which was refined by screening and milling after processing with the heating process method, was 96 %.

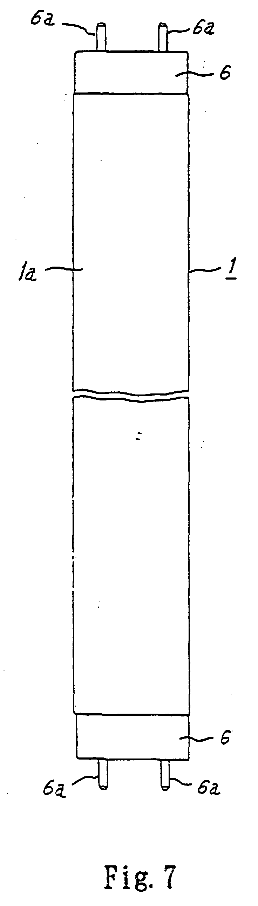

Fig. 7 is a partial front section of the fluorescent lamp regenerated according to the third embodiment of the present invention.

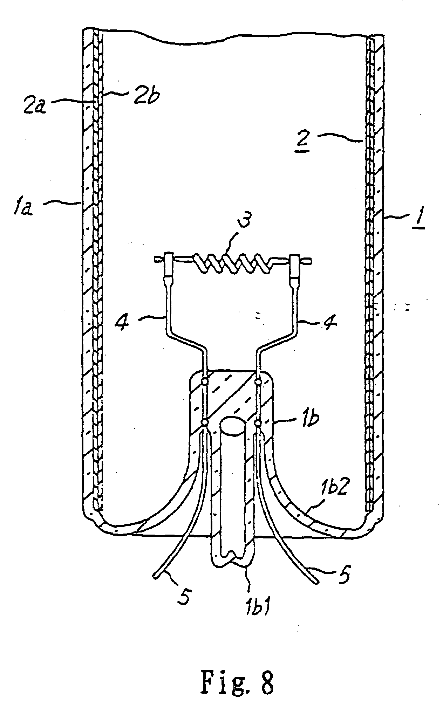

Fig. 8 is an enlarged section showing a part of Fig. 7.

In Figs. 7 and 8, same numerals are assigned for the same elements in Figs. 4 and 5, and their descriptions will be eliminated.

The fluorescent lamp obtained according to the embodiment of the present invention is a straight type fluorescent lamp of FL40SS type and the diameter of the tube is 28 mm and the length of the tube is 1198 mm.

Also, the fluorescent substance layer 2 is composed as two-layer construction. In other words, on the inner surface of the light-transmissive discharge vessel 1, a non-recycled fluorescent substance layer 2a is formed and on the inner surface of the layer further a recycled fluorescent substance layer 2b is formed. The ratio of the fluorescent substances used for the non-recycled fluorescent substance layer 2b is 5 : 5 by mass.

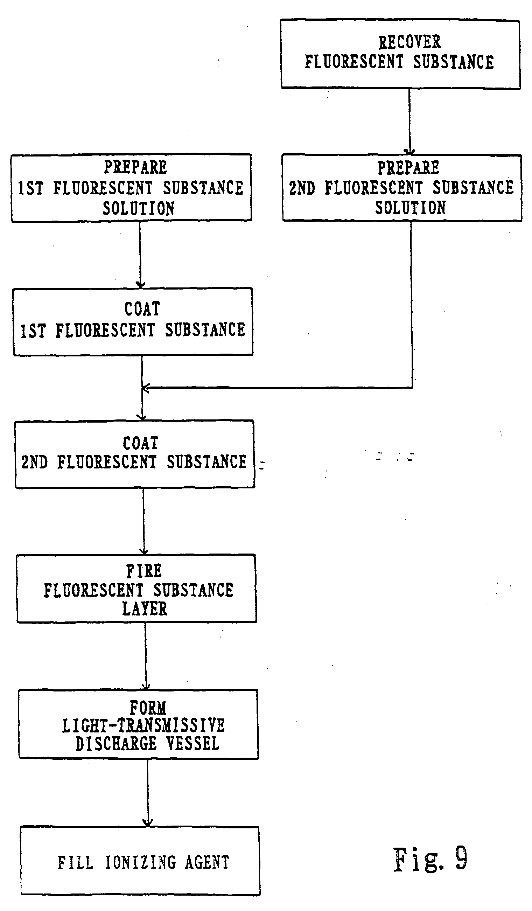

Fig. 9 is a flowchart showing the method according to the third embodiment of the present invention.

In other words, in the first step for preparing a fluorescent substance solution, the fluorescent substance solution using non-recycled fluorescent substance is prepared, and the same is coated on the inner surface of the glass bulb to form a first fluorescent substance coating at the first fluorescent substance coating step.

Next, at the recovering step of the recycled fluorescent substance, the recycled fluorescent substance is recovered and in the second preparing process for fluorescent substance solution, the fluorescent substance solution using the recycled fluorescent substance is prepared and this solution is coated on the first fluorescent substance coating to from the second fluorescent coating overlapping film at the second fluorescent substance coating step.

Thereafter, in the fluorescent substance firing process, the fluorescent substance layer is formed by firing the first and the second fluorescent substance coatings.

Furthermore, the fluorescent lamp is completed after the process for forming the light-transmissive discharge vessel and the process for filling the ionizing agent.

And the fluorescent lamp obtained in this way had a total luminous flux of 98 % compared to the one of the fluorescent lamp which was manufactured using non-recycled fluorescent substance only.

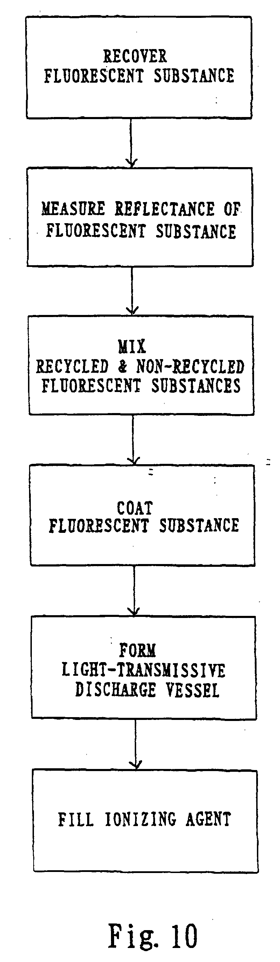

Fig. 10 is a flowchart showing the method according to the fourth embodiment of the present invention.

In other words, when the fluorescent substance layer including recycled fluorescent substance is formed, a step for measuring reflectance rate of the fluorescent substance to measure the reflectance of the fluorescent substance in advance, and a process for mixing the fluorescent substances to obtain a specified reflectance based on the measured reflectance rate are provided.

At the process for measuring the reflectance of the fluorescent substance, the reflectance rate of the recycled fluorescent substance and the non-recycled fluorescent substance is measured independently.

At the fluor3scent substance mixing process, the reflectance rate of the recycled fluorescent substance is calculated assuming that the reflectance rate of the non-recycled fluorescent substance as 100 % and the required mixing ratio is obtained by calculation so that the reflectance rate of the mixed one becomes 96 %, and mix is performed. By the way, this mixing of the fluorescent substances is performed by specifying the charging volume of the respective fluorescent substance at the preparation of the fluorescent coating solution.

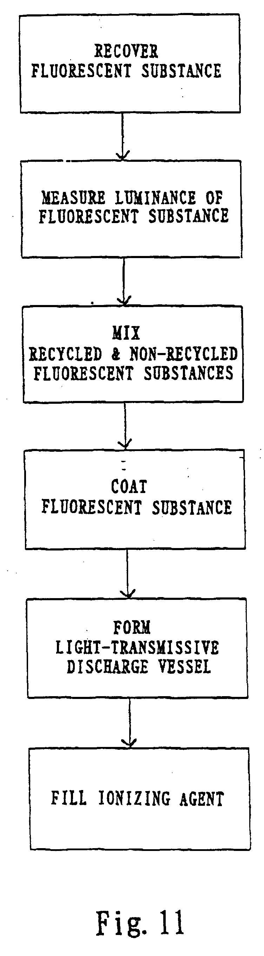

Fig. 11 is a flowchart showing the method according to the fifth embodiment of the present invention.

In other words, when the fluorescent substance layer including the recycled fluorescent substance is formed, a step for measuring the luminescence of the fluorescent substance in advance and a step for mixing the fluorescent substances based on the measured luminescence so that the specified luminescence can be obtained are provided.

At the fluorescent substance luminescence measuring step, the luminescence of the recycled fluorescent substance and the non-recycled fluorescent substance is measured independently. The mixing of the fluorescent substances is performed same as of the third embodiment.

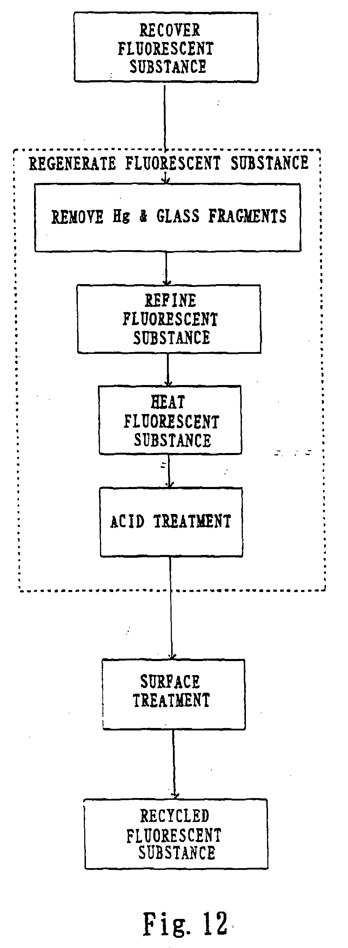

Fig. 12 is a flowchart showing the step for recovering the recycled fluorescent substance in case of the method according to the sixth embodiment of the present invention.

In other words, in the regenerating step after the step for recovering the fluorescent substance from the fluorescent lamp to be recycled, a step for treating the recycled fluorescent substance with an acid is provided at the last and at the same time a surface treating step for the recycled fluorescent substance particles is provided after the acid treating step.

The regeneration step comprises a mercury and glass fragment removing process, a fluorescent substance refining process, a heating process and an acid treating process. The acid treating process is provided after the heating process. The acid treating process comprises a step for washing the recovered fluorescent substance with pure water, after removing the very thin surface layer of the fluorescent substance particles by etching through washing the recycled fluorescent substance with a thin nitric acid solution.

The surface treating process comprises a step to obtain the surface treated recycled fluorescent substance by filtration and drying, after the recycled fluorescent substance is washed with pure water at the acid treating process, and after adding a metal oxide fine particle dispersing solution and agitating enough, wherein the metal oxide fine particle dispersing solution of Al₂O₃ of the mean diameter of 15 nm is prepared in advance. By this process, on the surface of the fluorescent substance particle the metal oxide fine particle adheres almost homogeneously.

The other processes for regenerating the fluorescent lamp are same to the recovery process shown in Fig. 6. In other words, the fluorescent substance suspension comprising the recycled fluorescent substance, adhesive, binder and solvent is prepared, this suspension is coated on the inner surface of the glass bulb and the fluorescent substance layer is formed by firing, and the electrodes are attached to the both ends of the glass bulb for forming a light-transmissive discharge vessel. And then, the inside of the light-transmissive discharge vessel is evacuated and a discharging medium is filled therein to obtain the fluorescent lamp.

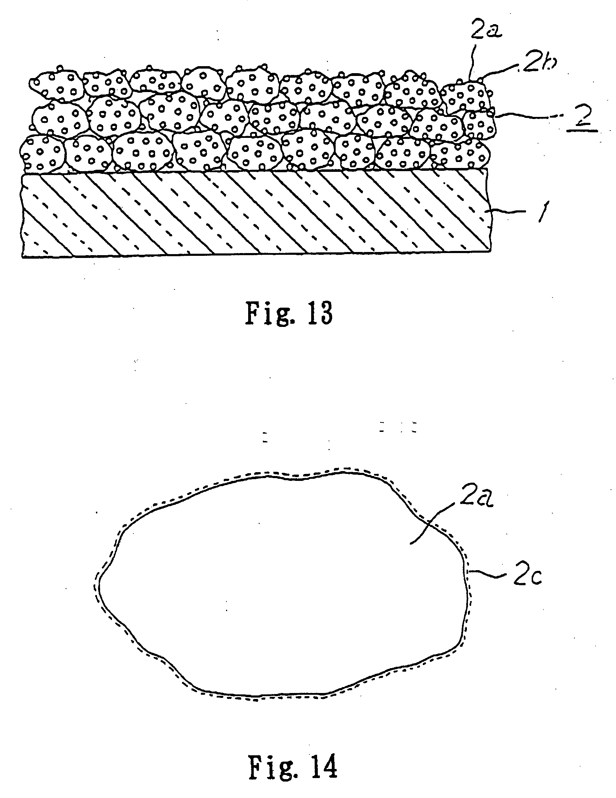

Fig. 13 is a schematic enlarged section showing the fluorescent lamp regenerated by the method of the second embodiment of the present invention.

In Fig. 13, same figures are applied to the same parts in Fig. 8, and the descriptions are eliminated. In this embodiment, the recycled three band emission fluorescent substance 2a in the fluorescent substance layer 2 is surface-treated, and as the result on the surface of the recycled fluorescent particle 2a a fine particle of Al₂O₃ of mean diameter of 15 nm adheres almost homogeneously. The adhering volume of Al₂O₃ is about 4 % of the volume of recycled fluorescent substance.

And, the fluorescent lamp of straight type FL20SS as the fluorescent lamp according to the embodiment of the present invention is manufactured together with a fluorescent lamp for comparison, of which specification is same except that the surface treatment of the fluorescent substances is not performed, and the lightening test for comparison was executed, in 1000 hours the total luminous flux of the lamp according to the embodiment of the present invention was about 95 %, while the one of the lamp for comparison was about 90 %.

Fig. 14 is a schematic drawing showing the recycled fluorescent substance particle in accordance with the third embodiment of the present invention.

In other words, a continuous yttrium oxide coating 2c is formed on the surface of the three band emission fluorescent substance particle 2a by CVD process.

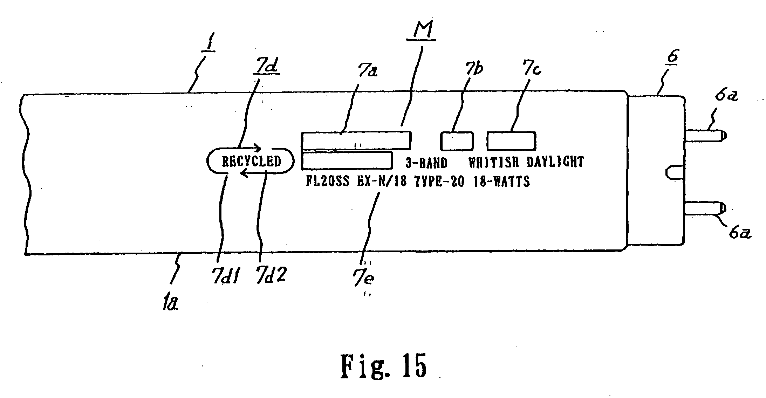

Fig. 15 is a partial front view of the recycled fluorescent lamp according to the fourth embodiment of the present invention.

In Fig. 15, same numerals are assigned for the same elements in Fig. 7, and their descriptions will be eliminated. In Fig. 15, M denotes a lamp mark.

The fluorescent lamp according to the embodiment of the present invention is a straight type fluorescent lamp, with a tube diameter of 28 mm and the tube length of 580 mm.

The lamp mark M is divided into three steps and the top step is for indicating manufacturer 7a, Japan Industrial Standard Mark 7b and inspection mark 7c, and the middle step is for indicating recycling 7d and type 7e,

The indication for recycling 7d consists of recycle mark 7d1 and the letters for "recycle" 7d2.

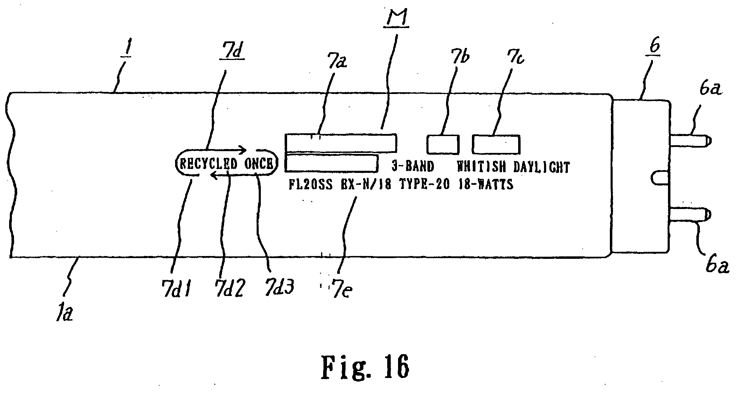

Fig. 16 is a front view of the recycled fluorescent lamp, partly sectioned according to the fifth embodiment of the present invention.

In Fig. 16, same figures are applied to the same parts in Fig. 15, and the descriptions are eliminated.

The lamp mark M included an indication for the number of times recycled 7ds (one time) after the letters "recycle". Therefore, the manufacturer of the fluorescent lamps may easily judge the possibility of the further recycling from the indication for the number of times recycled.

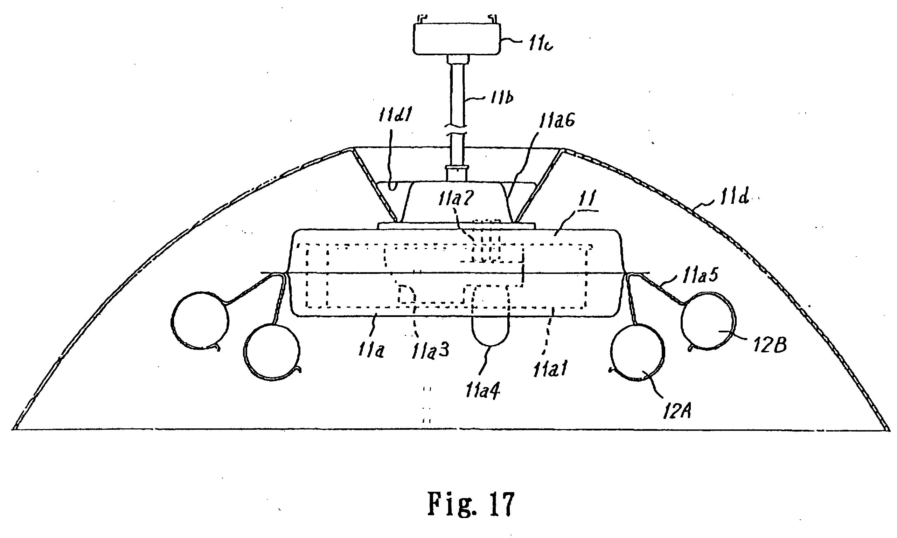

Fig. 17 is a section showing a lighting apparatus according to the sixth embodiment of the present invention, more in detail, code-pendant type lighting apparatus.

In Fig. 17, 11 indicates the lighting apparatus proper, 12A and 12B are fluorescent lamps as discharging lamps.

The lighting apparatus proper 11 is provided with a apparatus case 11a, a pendant code 11b, hanging ceiling cap 11c and a shade 11d.

Apparatus case 11a is so formed that the bottom surface is inflated and its outer surface is formed as a reflecting face, and involves a switching circuit including an inverter 11a1, a connector 11a2, switch unit 11a3 and an all-night lamp 11a4 in the inside.

Also, the apparatus case 11a is provided with a lamp holder 11a5 on the periphery. On the upper surface, code hanging/receiving device 11a6 is provided.

The bottom end of the pendant-code 11b is pulled in into the code hanging/receiving device 11a6 and connected to the connector 11a2. Also, the top end of pendant-code 11b is connected to the hanging ceiling cap 11c. And, the lighting apparatus is hung by the pendant-code 11b and the hanging ceiling cap 11c from the ceiling and is used.

The hanging length of the lighting apparatus can be adjusted for a desired height by retaining the excess portion of the pendant-code into the code hanging/receiving device 11a6.

The hanging ceiling cap 11c is installed in the ceiling in advance and is connected in one touch to the hanging body which is connected to the electrical source and thus the lighting apparatus can be connected mechanically and electrically.

The fluorescent lamp 12A is of the Type-FCL30 and the one 12B is of the Type-FCL32.

These fluorescent lamps 12A and 12B are of the similar construction as shown in Figs. 4 and 5, and their fluorescent substance layers consist of non-recycled fluorescent substance and recycled fluorescent substance. The lamps are held by the lamp-holder 11a5 and the bulb base pins are fit to the lamp socket (not shown).

The shade 11d comprises a light-transmissive synthetic resin and is of shape of bamboo hat and the top end is hung around the hanging/receiving device 11a6 and supported by the apparatus case 11a. And, the fluorescent lamps 12A and 12B are cooled by a thermal convection of room air, by exhausting the air warmed by the heat generated by the lamps in the shade 22d through the drafting holes 11d1 to the outside of the lighting apparatus.

As described above, according to the present invention, the recycled fluorescent substance and the recycled glass can be recovered and regenerated from the fluorescent lamps to be recycled with a good efficiency and without deteriorating the performance. Therefore, the utilization of the recycled fluorescent substance and the recycled glass can be increased to a large extent.

Furthermore, according to the present invention, a fluorescent lamp which total luminous flux is close to the one of the fluorescent lamp which has used non-recycled fluorescent substance only can be obtained by recovering the fluorescent substance from the fluorescent lamps to be recycled; by recovering the recycled fluorescent substance by heating and refining the same; by forming a fluorescent substance layer consisting of the recycled fluorescent substance and the non recycled fluorescent substance of the inner surface of the glass bulb; by enclosing a pair of the electrodes into the both ends of the glass bulb; by forming a light-transmissive discharge vessel by closing the both ends, and by filling an ionizing agent into the light-transmissive discharge vessel.

Furthermore, according to the present invention, as the suspended fluorescent coating solution of non-recycled fluorescent substance and recycled fluorescent substance is prepared and is coated on the inner surface of the glass bulb and the fluorescent substance layer is formed by firing, the construction of the fluorescent substance layer is simple and the recycled fluorescent lamp which regeneration is easy can be provided.

Still furthermore, according to the present invention, by forming first fluorescent substance coating mainly consisting of the non-recycled fluorescent substance and a second fluorescent substance coating mainly consisting of the recycled fluorescent substance respectively, and by forming the fluorescent substance layer by firing these coatings, a fluorescent lamp whose total luminous flux is close to the one of the fluorescent lamp that has used non-recycled fluorescent substance only, can be provided.

Furthermore, according to the present invention, in addition by heating and processing the fluorescent substance recovered from the fluorescent lamp to be recycled at 100 ~ 700 °C, the luminescence of the recycled fluorescent substance is high, and therefore a fluorescent lamp which total luminous flux is high can be provided, even when the mixing ratio of recycled fluorescent substance to the whole fluorescent substance is increased.

Furthermore, according to the present invention, by forming the fluorescent substance layer with the reflectance rate of more than 95 % including the recycled fluorescent substance assuming that the reflectance of the non-recycled fluorescent substance is 100 %, a method of recycling the fluorescent lamp can be provided, wherein, when the total luminous flux of the recycled fluorescent lamp is compared with the one of the fluorescent lamp made of non-recycled fluorescent substance, no remarkable difference can be recognized on the total luminous flux, and the necessary mixing ratio of the recycled fluorescent substance can be determined easily in order to obtain a required total luminous flux.

Furthermore, according to the present invention, by forming the fluorescent substance layer with the reflectance rate of more than 95 % including the recycled fluorescent substance assuming that the reflectance of the non-recycled fluorescent substance is 100 %, a method of recycling the fluorescent lamp can be provided, wherein, when the total luminous flux of the recycled fluorescent lamp is compared with the one of the fluorescent lamp made of non-recycled fluorescent substance, no remarkable difference can be recognized on the total luminous flux, and the necessary mixing ratio of the recycled fluorescent substance can be determined exactly in order to obtain a required total luminous flux.

Furthermore, according to the present invention, by recovering the fluorescent substance from the fluorescent lamp to be recycled; by providing a recovery process to obtain the recycled fluorescent substance performing a surface treatment, after the recovery processing including at least an acid treatment, a method of recycling the fluorescent lamp can be provided, wherein the adhesion of mercury and gas to the recycled fluorescent substance particle is prevented and the luminous flux maintaining performance is improved.

Furthermore, according to the present invention, by providing a fluorescent substance layer including the recycled fluorescent substance which surface is processed by having the metal oxide adhered on the surface of the fluorescent substance particle, the fluorescent lamp which luminous flux maintaining performance is improved can be provided, wherein the adhesion of mercury and gas to the recycled fluorescent particle is prevented.

Furthermore, according to the present invention, by providing an indication showing that the product is a recycled product including the fluorescent layer containing the recycled fluorescent substance, the fluorescent lamp which possibility for recycling of the fluorescent substance and the like can be judged easily, can be provided.

Furthermore, according to the present invention, a lighting apparatus provided with the regenerated fluorescent lamp regenerated according to the methods as described in the embodiments 6^{th} to 12^{th}, or with the fluorescent lamp according to the embodiments from 13th to 17th can be provided.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are contained in the contents of the application and could be defined by claims differing in scope from the following claims, which different claims may be adopted subsequently during prosecution, for example, for the purposes of a divisional application.

## Claims

1. A method for recycling the fluorescent substance from the fluorescent lamps, comprising the steps of:
classifying the fluorescent lamps to be recycled into each kind or quality of the fluorescent substance;
recovering the fluorescent substance from the classified fluorescent lamps; and
regenerating the fluorescent substance by removing mercury from the recovered fluorescent substance material.

2. A method for recycling the fluorescent substance material from the fluorescent lamps as claimed in claim 1, further comprising the steps of:
recovering the glass material from the classified fluorescent lamps; and
regenerating the glass material by removing mercury from the recovered glass material by the process.

3. A method for recycling the fluorescent substance material as claimed in claim 1 or 2, wherein
the classifying process comprises a process for classifying the fluorescent substance for each kind of the fluorescent substance by inserting the ultraviolet radiation source into the inside of the fluorescent lamps; and having the ultraviolet radiation of wavelength of 365 nm from the source irradiated; by having the fluorescent substance exited; and by detecting the spectrum of the emitted radiation from the fluorescent substance.

4. A method for recycling the fluorescent substance material as claimed in claim 1, 2 or 3, wherein
the classifying process comprises a process for classifying the fluorescent lamps into the typical fluorescent lamps and the rapid start type fluorescent lamps based on the measured resistance value of the glass bulb, while the resistance of the glass bulbs is measured.

5. A method for recycling the fluorescent substance material as claimed in any preceding claim, wherein
the recovering process is **characterized in that** the fluorescent substance material is recovered by blowing pressurized gas onto the fluorescent substance layer formed on the inner surface of the glass bulb of the fluorescent lamp or removing the coating by suction.

6. A method for recycling the fluorescent substance material as claimed in any preceding claim, wherein
mercury is removed from the fluorescent substance material by applying at least one of floatation/separation process, pickling process and heating process to the recovered fluorescent material in the recovery process.

7. A method for recycling the fluorescent substance material as claimed in any preceding claim, wherein
mercury is removed from the fluorescent substance material by firing the recovered fluorescent material in a reducing atmosphere or in an inert atmosphere.

8. A method for recycling fluorescent lamps, comprising the steps of:
recovering fluorescent substance materials from fluorescent lamps to be recycled;
regenerating fluorescent substances from the recovered fluorescent substance materials; and
removing mercury by firing the fluorescent substance material in vacuum, in a reducing atmosphere or in an inert atmosphere in the process of regenerating the fluorescent substance material comprises.

9. A method for recycling the fluorescent substance material of the fluorescent lamps as claimed in claim 8, wherein a regenerating method for recycling the fluorescent substance material of the fluorescent lamps, further comprising the step of firing the recovered fluorescent substance material in the atmosphere, before the firing in a vacuum, in a reducing atmosphere or in an inert atmosphere is performed.

10. A method for recycling the fluorescent substance material of the fluorescent lamps as claimed in claims 8 or 9, further comprising the step of washing the fluorescent substance material with an acid solution, an alkaline solution or an alkali halide solution before the firing is performed.

11. A method for recycling the fluorescent substance material of the fluorescent lamps as claimed in any one of claims 8 or 9, further comprising the step for washing the fluorescent substance material with an acid solution, an alkaline solution or an alkali halide solution after the firing.

12. A method for recycling the fluorescent substance material of the fluorescent lamps as claimed in any one of claims 8 to 11, further comprising the step of dispersing the fluorescent substance material after the firing, while the fluorescent substance material is classified.

13. A method for recycling fluorescent lamps, comprising the steps of:
recovering fluorescent substance materials from fluorescent lamps to be recycled;
regenerating fluorescent substances from the recovered fluorescent substance materials; and
recovering the fluorescent substance material by spraying a pressurized liquid onto the fluorescent substance coating on the inner surface of the fluorescent lamps, in the process of recovering the fluorescent substance material from the fluorescent lamps

14. A method for recycling fluorescent lamps as claimed in claim 13, wherein water, acid solution or alkaline solution is used for the liquid to be sprayed on the fluorescent substance coating.

15. A method for recycling fluorescent lamps as claimed in claim 13 or 14, wherein in the process for recovering the fluorescent substance material from the fluorescent lamps, after spraying the pressurized liquid onto the inner surface of the glass bulb, remaining fluorescent substance coating is mechanically stripped off

16. A method for regenerating fluorescent substance material of the fluorescent lamps as claimed in any one of claims 1 to 15, wherein the glass bulb is cut at the portions inwardly apart by more than 10 mm from the positions of electrodes but within 100 mm from the tube ends of the fluorescent lamp and the fluorescent substance material is recovered from the inner surface of the cut glass bulb.

17. A method for regenerating glass bulbs of fluorescent lamps, comprising the steps of:
separating the fluorescent substance material from the inner surface of the glass bulb of the fluorescent lamp to be recycled;
recovering the glass bulbs; and
removing mercury adhered to or contained in the glass bulb by immersing the recovered glass bulbs into a sulfuric acid.

18. A method for regenerating glass bulbs of fluorescent lamps, comprising the steps of:
recovering the glass bulbs by removing the fluorescent substance material from the inner surface of the rapid start type fluorescent lamps; and
removing the tin oxide coating from the inner surface of the recovered glass bulb.

19. A method for regenerating glass bulbs of fluorescent lamps as claimed in claim 18, wherein the tin oxide coating is removed by heating the recovered glass bulbs in a reducing atmosphere.

20. A method for regenerating glass bulbs of fluorescent lamps as claimed in claim 18, wherein the tin oxide coating is removed by treating the recovered glass bulbs with an acid solution or an alkaline solution.

21. A fluorescent lamp, comprising:
a light-transmissive discharge vessel made of glass bulb;
fluorescent substance coating on the inner surface of the light-transmissive discharge vessel, wherein the coating containing a non-recycled fluorescent substance and a recycled fluorescent substance as produced by the method of any one of the previous claims 1 to 16
a pair of electrodes enclosed on the both ends of the light-transmissive discharge vessel;
an ionizing agent filled in the light-transmissive discharge vessel; and
a bulb base attached to the light-transmissive discharge vessel,

22. A fluorescent lamp as claimed in claim 21, wherein
the recycled fluorescent substance particles are surface-treated with a metal oxide,

23. A fluorescent lamp as claimed in claim 21, wherein
an indication showing that the same is a recycled product is attached to the light-transmissive discharge vessel,

24. A fluorescent lamp, comprising:
a lighting apparatus proper; and
a fluorescent lamp as defined in any one of claims 21 to 23, which is supported in the lighting apparatus,
